(19) Europäisches Patentamt
European Patent Office
Office européen des brevets

(11) EP 4 700 056 A1

(12) EUROPEAN PATENT APPLICATION

(43) Date of publication:
**25.02.2026 Bulletin 2026/09**

(21) Application number: **24306374.0**

(22) Date of filing: **20.08.2024**

(51) International Patent Classification (IPC):
***C08G 18/22*** *(2006.01)* ***B33Y 70/00*** *(2020.01)*
***C08F 290/06*** *(2006.01)* ***C08G 18/42*** *(2006.01)*
***C08G 18/67*** *(2006.01)* ***C08G 18/75*** *(2006.01)*

(52) Cooperative Patent Classification (CPC):
**C08G 18/755; B33Y 70/00; B33Y 80/00; C08F 290/067; C08G 18/227; C08G 18/4277; C08G 18/672;** B33Y 10/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ARKEMA FRANCE**
**92800 Puteaux (FR)**

(72) Inventor: **MONNIER, Guillaume**
**60550 VERNEUIL EN HALATTE (FR)**

(74) Representative: **Arkema Patent**
**Arkema France**
**DRD-DPI**
**51, Esplanade du Général de Gaulle**
**CS 10478**
**92907 Paris La Défense Cedex (FR)**

# (54) URETHANE (METH)ACRYLATE

(57) The present invention relates to a urethane (meth)acrylate, resulting from the reaction of at least one caprolactone-diol obtained from the reaction of caprolactone and dipropylene glycol, at least one polyisocyanate, and at least one hydroxy-functional (meth)acrylate. The present invention also relates to curable composition comprising such urethane (meth)acrylate, as well as the use of the curable compositions as coating compositions, sealant compositions, molding compositions, dental compositions, composite material compositions or 3D printing compositions.

EP 4 700 056 A1

## Description

### FIELD OF THE INVENTION

This invention relates to a urethane (meth)acrylate, resulting from the reaction of at least one caprolactone-diol obtained from the reaction of caprolactone and dipropylene glycol, at least one polyisocyanate, and at least one hydroxy-functional (meth)acrylate. The present invention also relates to curable composition comprising such urethane (meth) acrylate, as well as the use of the curable compositions as coating compositions, sealant compositions, molding compositions, dental compositions, composite material compositions or 3D printing compositions.

### BACKGROUND

Urethane (meth)acrylates are valuable components used in curable compositions. These curable compositions may for example be suitable for applications such as coatings, sealants, moldings, dental materials, composite materials, or 3D printing.

Urethane (meth)acrylates are synthetized by reacting polyols, polyisocyanates and hydroxy-functional (meth) acrylates. Polyester polyols based on polycaprolactone-diol initiated with diethylene glycol, such as those available from INGEVITY or DAICEL, or described in the prior art, are sometimes employed in the preparation of urethanes (meth) acrylates. For instance, US 2020/0199346 A1 (Ivoclar Vivadent AG) details a radically polymerizable oligomer formed by the polymerization of 2-hydroxyethyl (meth)acrylate, 1-isocyanato-3-isocyanatomethyl-3,5,5-trimethylcyclohexane, ε-caprolactone and diethylene glycol. This oligomer is used in the production of dental parts effected using stereolithographic techniques.

However, the use of commercially available (meth)acrylate urethanes is sometimes limited for certain applications, due to the lack of durability and surface toughness in compositions that incorporate them. This limitation is particularly notable in applications requiring materials with higher elongation properties.

One object of the present invention is to provide a urethane (meth)acrylate for applications requiring materials with superior durability and surface toughness, for example for formulations intended for curing in applications such as coatings, sealants, moldings, dental materials, composite materials, or for 3D printing.

### BRIEF SUMMARY

In a **first aspect,** the present invention provides a **urethane (meth)acrylate,** wherein the urethane (meth) acrylate results from the reaction of:

- at least one caprolactone-diol resulting from the reaction of caprolactone and dipropylene glycol;
- at least one polyisocyanate; and
- at least one hydroxy-functional (meth)acrylate.

The caprolactone-diol may have a number average molecular weight (Mn) from 300 to 1,300 g/mol, preferably from 400 to 1,200 g/mol, more preferably from 500 to 1,100 g/mol.

The caprolactone-diol may comprise from 2 to 10, preferably from 3 to 9, preferably from 4 to 8, units derived from ring-opening of caprolactone.

The polyisocyanate may be is a diisocyanate, preferably chosen from an aliphatic, a cycloaliphatic, and an aromatic diisocyanate, preferably a cycloaliphatic diisocyanate, and more preferably the polyisocyanate is isophorone diisocyanate.

The hydroxy-functional (meth)acrylate may be chosen from a hydroxyalkyl (meth)acrylate, a poly(oxyalkylene) (meth)acrylate and a caprolactone (meth)acrylate, preferably a hydroxyalkyl (meth)acrylate, and more preferably 2-hydroxyethyl (meth)acrylate.

In a **second aspect,** the present invention also provides a **process for preparing a urethane (meth)acrylate** comprising the steps of:

a) providing a caprolactone-diol resulting from the reaction of caprolactone and dipropylene glycol; and
b) reacting the caprolactone-diol of step a) with at least one polyisocyanate and at least one hydroxy-functional (meth) acrylate to obtain a urethane (meth)acrylate.

In a **third aspect,** the present invention provides a **curable composition** comprising:

A) at least one urethane (meth)acrylate according to the present invention or obtained according to the process of the

present invention; and
B) a polymerizable component other than component A).

In a **fourth aspect,** the present invention relates to the **use of the curable composition** of the present invention as a coating composition, a sealant composition, a molding composition, a dental composition, a composite material composition or for 3D printing.

In a **fifth aspect,** the present invention provides a **method of making a cured composition,** comprising curing the curable composition of the present invention. Such method may comprise exposing the curable composition to radiation such UV, near-UV, visible, infrared, near-infrared and/or electron beam radiation or heat.

In a **sixth aspect,** the present invention also provides a **cured composition** obtained by curing the curable composition of the present invention.

In a **seventh aspect,** the present invention also relates to an **article** comprising the cured composition of the present invention, preferably wherein at least part of the article is 3D-printed or molded.

## DETAILED DESCRIPTION

In the present application:

- the expression "comprised between ... and ..." or "from ... to..." should be understood as including the limits;
- any description, even though described in relation to a specific embodiment, is applicable to and interchangeable with other embodiments of the present invention;
- where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components; any element or component recited in a list of elements or components may be omitted from such list; and
- any recitation herein of numerical ranges by endpoints includes all numbers subsumed within the recited ranges as well as the endpoints of the range and equivalents.

## Urethane (meth)acrylate

The present invention relates to a urethane (meth)acrylate, wherein the urethane (meth)acrylate results from the reaction of:

- at least one caprolactone-diol resulting from the reaction of caprolactone and dipropylene glycol;
- at least one polyisocyanate; and
- at least one hydroxy-functional (meth)acrylate.

The term "urethane (meth)acrylate" as used herein means a compound comprising at least one urethane bond and at least one (meth)acrylate functional group. Such compounds may also be referred to as urethane (meth)acrylate oligomers. The term "urethane bond" as used herein means a -NH-C(=O)-O- or a -O-C(=O)-NH- bond. The term "(meth) acrylate functional group" as used herein means either an acryloyl functional group $-C(=O)-CH=CH_2$ or a methacryloyl functional group $-C(=O)-C(CH_3)=CH_2$.

The urethane (meth)acrylates of the present invention are characterized in that they improve the resistance to deformation, wear and surface indentation or penetration of formulations incorporated them, when cured, as demonstrated in the examples. More precisely, formulations incorporating the urethane (meth)acrylates of the present invention present higher hardness, in comparison to formulations incorporating commercial urethane (meth)acrylates based on polycaprolactone-diol initiated with diethylene glycol, such as those available from INGEVITY (e.g., CAPA® 2085) or DAICEL.

The urethane (meth)acrylate of the invention is the reaction product of the above-mentioned compounds. The urethane (meth)acrylate of the present invention may be a mixture of urethane (meth)acrylates.

The urethane (meth)acrylate of the present invention may have a viscosity from 10 to 100 Pa.s at 50°C, preferably from 15 to 80 Pa.s at 50°C, as measured according to the method defined herein.

### Caprolactone-diol

The urethane (meth)acrylate of the present invention results from the reaction of at least three components. One of these components is a caprolactone-diol. In other words, the urethane (meth)acrylate comprises one or more units

derived from a caprolactone-diol. The urethane (meth)acrylate of the present invention may result from the reaction of one or several distinct caprolactone-diols.

The caprolactone-diol used to prepare the urethane (meth)acrylate of the present invention results from the reaction of caprolactone and dipropylene glycol. In particular, the caprolactone-diol may result from the ring-opening reaction of caprolactone initiated by dipropylene glycol. The reaction may take place in the presence of a catalyst, for example an organometallic catalyst. Examples of suitable organometallic catalyst include organometallic catalyst based on bismuth, tin, zirconium, cobalt, iron, copper, zinc or titanium.

The caprolactone-diol used herein comprises one of more units derived from ring-opening of caprolactone and one unit derived from dipropylene glycol.

The caprolactone-diol may comprise from 2 to 10, preferably from 3 to 9, preferably from 4 to 8, units derived from ring-opening of caprolactone. The caprolactone-diol may comprise 1 unit derived from dipropylene glycol.

The caprolactone-diol may be represented by the following formula (I):

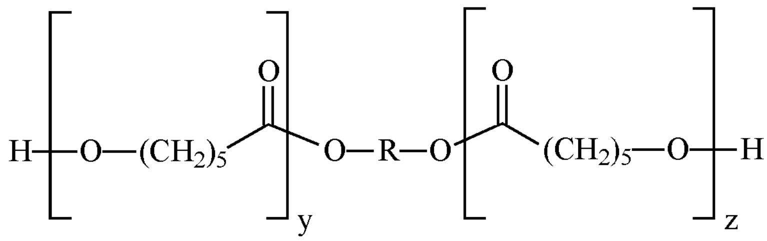
(I)

wherein

R is the residue of dipropylene glycol (without the OH groups, i.e., -CHR'-CHR"-O-CHR*-CHR**-wherein one of R' and R" is H and the other is Me and one of R* and R** is H and the other is Me);
y and z are independently from 0 to 10 and the sum y + z is from 2 to 10.

In some embodiments, the caprolactone-diol has a molecular weight (M) from 300 to 1,300 g/mol, preferably from 400 to 1,200 g/mol, more preferably from 500 to 1,100 g/mol, as measured according to the following equation (eq. 1):

$$M = (56100 * F)/iOH \quad (eq.1)$$

wherein

F is the hydroxyl functionality of the caprolactone-diol (i.e., 2), and
iOH is the hydroxyl value (in mg KOH/g) of the caprolactone-diol.

In some embodiments, the caprolactone-diol has a hydroxyl number (iOH) from 100 to 200 mg KOH/g, preferably from 120 to 150 mg KOH/g.

A detailed method for measuring the hydroxyl number (iOH) of the caprolactone-diol (PCL in the formula below) used in the present invention is provided in the examples of the present invention. According to the method, defined quantities of caprolactone-diol (PCL) and isophorone diisocyanate (IPDI) are first mixed with toluene for 2 hours at 60°C. The isocyanate index (iNCO) is then determined by titration using a 0.1N KOH solution and a Methrom Titrando 888 titrator. The hydroxyl functionality ($iOH_{PCL}$) of the caprolactone-diol (PCL) in mg KOH/g is then calculated using the following equation (eq.2):

$$iOH_{PCL} = \frac{(m_{IPDI} \times NCOew_{IPDI}) - (m_{tot} \times iNCO_{measured})}{m_{PCL}} \quad (eq.\ 2)$$

wherein:

$m_{IPDI}$ is the weight of IPDI in grams,
$m_{PCL}$ is the weight of PCL in grams,
$m_{tot}$ is the total weight of IPDI and PCL in grams,
$NCOew_{IPDI}$ is the NCO equivalent of IPDI which can be determined with the following formula: $NCOew_{IPDI} = (56100/M_{IPDI})*F_{IPDI}$ where $M_{IPDI}$ is the molecular weight of IPDI (i.e., 222.3 g/mol) and $F_{IPDI}$ is the functionality of IPDI (i.e., 2), and

$iNCO_{measured}$ (in mg KOH/g) is the residual NCO index measured after reaction of IPDI and PCL.

The weight content of caprolactone units in the caprolactone-diol may be from 60 to 96 wt.%, preferably from 70 to 94 wt.%, more preferably from 75 to 92 wt.%, based on the total weight of the caprolactone-diol.

The molar ratio caprolactone: dipropylene glycol in the caprolactone-diol may be from 2:1 to 10:1, preferably from 3: 1 to 9: 1, more preferably from 4: 1 to 8:1.

The weight content of caprolactone-diol units in the urethane (meth)acrylate may be from 20 to 80 wt.%, preferably from 25 to 75 wt.%, more preferably from 30 to 70 wt.%, based on the total weight of the urethane (meth)acrylate.

Polyisocyanate

The urethane (meth)acrylate of the present invention results from the reaction of at least three components. One of these components is a polyisocyanate. In other words, the urethane (meth)acrylate comprises one or more units derived from a polyisocyanate. The urethane (meth)acrylate of the present invention may result from the reaction of one or several distinct polyisocyanates.

The term "polyisocyanate" as used herein means a compound having at least two -N=C=O groups. The term "diisocyanate" as used herein means a compound having two -N=C=O groups.

The polyisocyanate may be an aliphatic polyisocyanate, a cycloaliphatic polyisocyanate, an aromatic polyisocyanate, or a combination of these (including araliphatic). Preferably, the polyisocyanate is an aliphatic or a cycloaliphatic polyisocyanate, or a combination of both. More preferably the polyisocyanate is a cycloaliphatic polyisocyanate. The urethane (meth)acrylate of the present invention may result from the reaction of several distinct polyisocyanates. For example, the urethane (meth)acrylate of the present invention may result from the reaction of several distinct cycloaliphatic polyisocyanates.

In a preferred embodiment, the polyisocyanate is a diisocyanate. The diisocyanate may be an aliphatic diisocyanate, a cycloaliphatic diisocyanate, an aromatic diisocyanate, or a combination of these (including araliphatic). Preferably, the polyisocyanate is an aliphatic or a cycloaliphatic diisocyanate, or a combination of both. More preferably the polyisocyanate is a cycloaliphatic diisocyanate. The urethane (meth)acrylate of the present invention may result from the reaction of several distinct diisocyanates. For example, the urethane (meth)acrylate of the present invention may result from the reaction of several distinct cycloaliphatic diisocyanates.

In some embodiments of the invention, the diisocyanate may be represented by the following general formula (VII):

OCN-X-NCO (VII)

wherein X is a divalent organic moiety, such as a divalent hydrocarbon moiety. The divalent hydrocarbon moiety may for example be aliphatic (such as a linear or branched), cycloaliphatic, aromatic or araliphatic. The divalent organic moiety may comprise from 2 to 20 carbon atoms and optionally one or more heteroatoms, such as N or O.

Cycloaliphatic diisocyanates, such as isophorone diisocyanate (also referred to as 3-isocyanatomethyl-3,5,5-trimethylcyclohexyl isocyanate or IPDI), cyclohexyl-1,3-diisocyanate, cyclohexyl-1,4-diisocyanate, 2,4-diisocyanato-1-methylcyclohexane, 2,6-diisocyanato-1-methylcyclohexane 4,4'-methylene-bis(cyclohexyl isocyanate), 1,1'-methylene-bis(4-isocyanato)cyclohexane and norbornane diisocyanate (NBDI), may be utilized and are preferred. Other polyisocyanates may include, without limitation, aromatic diisocyanates such as toluene diisocyanates (TDI), diphenylmethane diisocyanates, tetramethylxylene diisocyanates, and naphthylene diisocyanates, or aliphatic diisocyanates such as 1,4-tetramethylene diisocyanate, 1,5-pentamethylene diisocyanate, 1,6-hexamethylene diisocyanate (HDI), 1,12-dodecane diisocyanate, 2,2,4- or 2,4,4-trimethylhexamethylene diisocyanate. The diisocyanates listed above may also be used in the form of dimers or trimers, such as biurets, allophonates and isocyanurates.

In a particularly preferred embodiment, the polyisocyanate is isophorone diisocyanate.

The weight content of polyisocyanate units in the urethane (meth)acrylate is from 5 to 70 wt.%, preferably from 10 to 50 wt.%, more preferably from 15 to 40 wt.%, based on the total weight of the urethane (meth)acrylate.

Hydroxy-functional (meth)acrylate

The urethane (meth)acrylate of the present invention results from the reaction of at least three components. One of these components is a hydroxy-functional (meth)acrylate. In other words, the urethane (meth)acrylate comprises one or more units derived from a hydroxy-functional (meth)acrylate. The urethane (meth)acrylate of the invention may result from the reaction of one or several distinct hydroxy-functional (meth)acrylates.

The term "hydroxy-functional (meth)acrylate" as used herein means a compound comprising at least one hydroxy group and at least one (meth)acrylate group corresponding to the structure $-O-C(=O)-CH=CH_2$ or -O-

$C(=O)-C(CH_3)=CH_2$.

The hydroxy-functional (meth)acrylate may have a (meth)acrylate functionality (acrylate and/or methacrylate functionality) ranging from 1 to 5 (i.e., it contains 1 to 5 (meth)acrylate functional groups per molecule).

The hydroxy-functional (meth)acrylate may have a hydroxyl functionality of 1 (i.e., it contains 1 hydroxyl functional groups per molecule).

The hydroxy-functional (meth)acrylate may be according to the following formula (Ia):

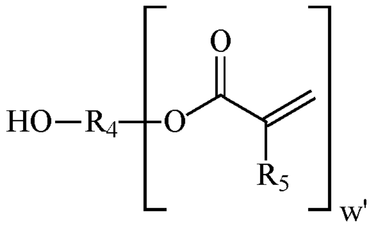

(Ia)

wherein

$R_4$ is a (w'+1)valent linker, in particular a (w'+1)valent linker having from 2 to 100 carbon atoms and optionally one or more heteroatoms selected from O, N and S, more particularly a (w'+1)valent linker selected from an alkylene, an alkoxylated alkylene, a polycaprolactone linker and combinations thereof;
$R_5$ is H or methyl;
w' is 1 to 5, in particular 1 to 3, more particularly 1.

In one embodiment, $R_4$ may be a divalent linker selected from one of formulae (IIa) to (VIa):

$-(CR_{22}R'_{22})_m-$ (IIa)

$-[(CR_{23}R'_{23})_n-O]_o-(CR_{23}R'_{23})_n-$ (IIIa)

$-[(CR_{24}R'_{24})_p-O]_q-(CR_{25}R'_{25})_r- [O-(CR_{26}R'_{26})_{p'}]_{q'}-$ (IVa)

$-[(CR_{27}R'_{27})_{s}-C(=O)O]_t-(CR_{28}R'_{28})_{u}-*$ (Va)

$- [(CR_{29}R'_{29})_v-O-C(=O)-(CR_{30}R'_{30})_w-C(=O)-O]_x-(CR_{29}R'_{29})_V-$ (VIa)

wherein

$R_{22}$, $R'_{22}$, $R_{25}$, $R'_{25}$, $R_{29}$, $R'_{29}$, $R_{30}$ and $R'_{30}$ are independently H or alkyl;
$R_{23}$, $R'_{23}$, $R_{24}$, $R'_{24}$, $R_{26}$, $R'_{26}$, $R_{27}$, $R'_{27}$, $R_{28}$ and $R'_{28}$ are independently H or methyl;
m is 2 to 50;
n, p and p' are independently 2 to 4;
o is 1 to 20;
q and q' are independently 0 to 20 with the proviso that at least one of q and q' is not 0 ;
r is 2 to 20;
s is 3 to 12;
t is 1 to 20;
u is 2 to 8;
v is 2 to 20;
w is 2 to 30;
x is 1 to 20;
the symbol * represents the point of attachment to the (meth)acrylate group.

In particular, $R_4$ may be a divalent linker selected from an alkylene such as 1,2-ethylene, 1,2- or 1,3-propylene, 1,2-, 1,3- or 1,4-butylene, 1,5-pentylene, 1,6-hexylene, 1,8-octylene, 1,9-nonylene, 1,10-decylene, 1,12-dodecylene, 1,18-octadecylene, 2-methyl-1,3-propanediyl, 2,2-diethyl-1,3-propanediyl, 3-methyl-1,5-pentanediyl, 3,3-dimethyl-1,5-pentanediyl, 2,2-dimethyl-1,3-propanediyl, 2,4-diethyl-1,5-pentanediyl; an alkoxylated derivative of the aforementioned alkylenes; an esterified derivative of the aforementioned alkylenes; a residue of a di-, tri-, tetra- or polyoxyalkylene (without

the OH groups) such as a residue of di-, tri- or tetraethylene glycol, di-, tri- or tetrapropylene glycol, di-, tri- or tetrabutylene glycol, polyethylene glycol, polypropylene glycol, polybutylene glycol, polyethylene glycol-co-propylene glycol); and a residue of a polyester polyol (without the OH groups).

In another embodiment, $R_4$ may be a trivalent linker according to one of the following formulae (12), (13), (19) and (20), or a tetravalent linker according to one of the following formulae (14) and (15):

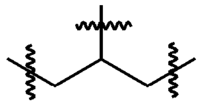 (12)

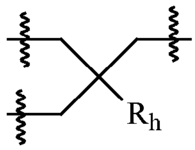 (13)

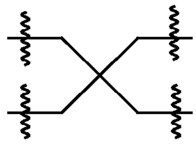 (14)

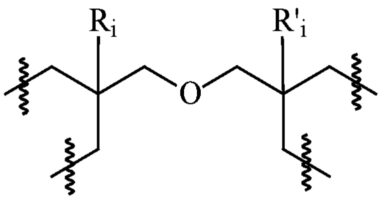 (15)

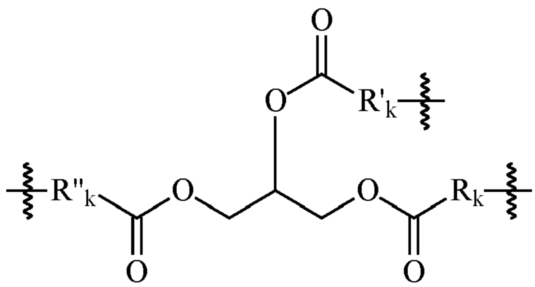 (19)

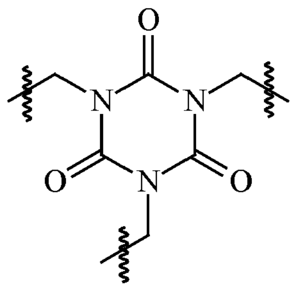 (20)

wherein

each $R_h$, $R_i$ and $R'_i$ is independently H or alkyl;
$R_k$, $R'_k$ and $R''_k$ are independently alkylene or alkenylene.

In some embodiments, the hydroxy-functional (meth)acrylate may be chosen from a hydroxyalkyl (meth) acrylate, a poly(oxyalkylene) (meth)acrylate and a caprolactone (meth)acrylate, preferably a hydroxyalkyl (meth)acrylate.

Suitable hydroxyalkyl (meth)acrylates correspond to formula (Ia) as defined above wherein w' is 1 and $R_4$ is divalent linker according to formula (IIa) as defined above.

Examples of hydroxyalkyl (meth)acrylates useful in the present invention include, without limitation, 2-hydroxyethyl acrylate (HEA), 2-hydroxyethyl methacrylate (HEMA), 2-hydroxypropyl acrylate, 2-hydroxypropyl methacrylate, 3-hydroxypropyl (meth)acrylate, 2-hydroxybutyl (meth)acrylate, 3-hydroxybutyl (meth)acrylate, 4-hydroxybutyl (meth) acrylate, neopentyl glycol mono(meth)acrylate, 1,6-hexanediol mono(meth)acrylate and the like and combinations thereof.

Suitable poly(oxyalkylene) (meth)acrylates correspond to formula (Ia) as defined above wherein w' is 1 and $R_4$ is divalent linker according to formula (IIIa) or (IVa) as defined above, preferably $R_4$ is divalent linker according to formula (IIIa).

Examples of poly(oxyalkylene) (meth)acrylates useful in the present invention include, without limitation, di-, tri-, tetra- and polyethylene glycol mono(meth)acrylate, di-, tri-, tetra- and polyethylene glycol diacrylate, di-, tri-, tetra- and polypropylene glycol mono(meth)acrylate, di-, tri-, tetra- and polytetramethylene ether glycol mono(meth)acrylate, PEG-PPG-PEG tri-block copolymer mono(meth)acrylate and the like and combinations thereof.

Suitable caprolactone (meth)acrylates correspond to formula (Ia) as defined above wherein w' is 1 and $R_4$ is divalent linker according to formula (Va) or (VIa), preferably $R_4$ is divalent linker according to formula (Va).

Caprolactone acrylates may be obtained by ring-opening polymerization of ε-caprolactone initiated with one of

the aforementioned hydroxyalkyl (meth)acrylates A preferred (poly)caprolactone (meth)acrylate is (poly)caprolactone 2-hydroxyethyl (meth)acrylate according to the following formula:

$$CH_2=CR_5-C(=O)-O-CH_2-CH_2-[O-(C=O)-(CH_2)_5]_t-OH$$

wherein $R_5$ is H or methyl and t is 1 to 20, preferably from 2 to 10.

In a particularly preferred embodiments, the hydroxy-functional (meth)acrylate is a hydroxyalkyl (meth)acrylate, preferably the hydroxy-functional (meth)acrylate is hydroxyethyl (meth)acrylate and/or 2-hydroxypropyl (meth)acrylate, more preferably 2-hydroxyethyl (meth)acrylate.

The weight content of hydroxy-functional (meth)acrylate units in the urethane (meth)acrylate is from 2 to 50 wt.%, preferably from 5 to 30 wt.%, more preferably from 10 to 25 wt.%, based on the total weight of the urethane (meth)acrylate.

The urethane (meth)acrylate may have a backbone comprised of units derived from the caprolactone-diol and units derived from the polyisocyanate. Such units may be alternating. The hydroxy groups of the caprolactone-diol may react with the isocyanate groups of the polyisocyanate to form urethane linkages. As such, the isocyanate units may be positioned between and link together caprolactone-diol units.

The extremities of the urethane (meth)acrylate may comprise units derived from the hydroxy-functional (meth) acrylate. In other words, such extremities may be formed after the reaction of the isocyanate group of the polyisocyanate and the hydroxy group of the hydroxy-functional (meth)acrylate to form a urethane linkage.

In some preferred embodiments, the urethane (meth)acrylate consists essentially of, or consists of, units derived from a polyisocyanate, units derived from a caprolactone-diol resulting from the reaction of caprolactone and dipropylene glycol and units derived from a hydroxy-functional (meth)acrylate.

In a particularly preferred embodiment, the urethane (meth)acrylate consists essentially of, or consists of, units derived from a diisocyanate (preferably isophorone diisocyanate), units derived from a caprolactone-diol resulting from the reaction of caprolactone and dipropylene glycol, and units derived from a hydroxyalkyl (meth)acrylate (preferably hydroxyethyl (meth)acrylate and/or 2-hydroxypropyl (meth)acrylate, more preferably hydroxyethyl (meth)acrylate).

In a more particularly preferred embodiment, the urethane (meth)acrylate may correspond to the following formula (VIII):

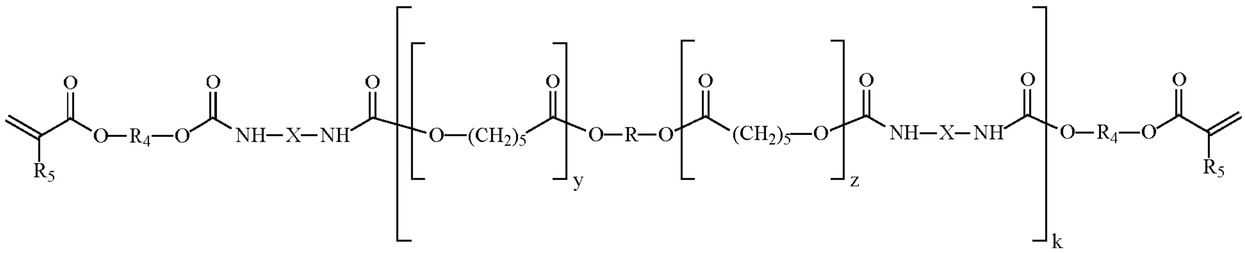

(VIII)

wherein

R is the residue of dipropylene glycol (without the OH groups, i.e., -CHR'-CHR"-O-CHR*-CHR**-wherein one of R' and R" is H and the other is Me and one of R* and R** is H and the other is Me);
X is a divalent organic moiety (residue of a diisocyanate), preferably X is the residue of isophorone diisocyanate;
$R_4$ is $-(CR_{22}R'_{22})_m-$, preferably $-CH_2-CH_2-$, $-CH_2-CH(CH_3)-$ or $-CH(CH_3)-CH_2-$, more preferably $-CH_2-CH_2-$;
$R_5$ is H or methyl;
$R_{22}$ and $R'_{22}$ are independently H or alkyl, preferably H or methyl;
k is from 1 to 50, preferably from 1 to 20, more preferably from 1 to 10;
m is from 2 to 50, preferably from 2 to 6, more preferably from 2 to 4;
y and z are independently from 0 to 10 and the sum y + z is from 2 to 10.

## Process for preparing the urethane (meth)acrylate

The present invention also relates to a process for preparing a urethane (meth)acrylate comprising the steps of:

a) providing a caprolactone-diol resulting from the reaction of caprolactone and dipropylene glycol; and
b) reacting the caprolactone-diol of step a) with at least one polyisocyanate and at least one hydroxy-functional (meth) acrylate to obtain a urethane (meth)acrylate.

The caprolactone-diol, the polyisocyanate and the hydroxy-functional (meth)acrylate are as described above.

Step b) of the process for preparing a urethane (meth)acrylate may be executed through various embodiments or subdivided into different substeps.

In one embodiment, the caprolactone-diol of step a) is reacted with at least one hydroxy-functional (meth)acrylate and at least one polyisocyanate in a single step to form the urethane (meth)acrylate of the present invention.

In another embodiment, the caprolactone-diol of step a) is first reacted with at least one polyisocyanate to form an isocyanate-caprolactone-diol adduct (substep b1)). The term "isocyanate-caprolactone-diol adduct" as used herein means the product of reaction between the caprolactone-diol and the polyisocyanate. The isocyanate-caprolactone-diol adduct is then reacted with the hydroxy-functional (meth)acrylate to form the urethane (meth)acrylate of the present invention (substep b2)).

In another embodiment which is particularly preferred, at least one hydroxy-functional (meth)acrylate is first reacted with at least one polyisocyanate to form an isocyanate-hydroxy-functional (meth)acrylate adduct (substep b1')). The term "isocyanate-hydroxy-functional (meth)acrylate adduct" as used herein means the product of reaction between the hydroxy-functional (meth)acrylate and the polyisocyanate. The isocyanate-hydroxy-functional (meth)acrylate adduct is then reacted with the caprolactone-diol of step a) to form the urethane (meth)acrylate of the present invention (substep b2')).

The process of the present invention, or certain steps or substeps only, may be carried out in a reactor.

The process of the present invention, or certain steps or substeps only, may be carried out with a catalyst. For example, the formation of isocyanate-caprolactone-diol adduct of substep b1) may be carried out in the presence of a so-called urethanisation catalyst. The term "urethanisation catalyst" as used herein means a substance capable of accelerating the reaction between a hydroxyl group and an isocyanate group to form a urethane linkage. In the context of the present invention, the urethanisation catalyst can expedite the reaction at a specified temperature and/or achieve a desired degree of reaction completion at a lower temperature than would occur without any urethanisation catalyst present.

Exemplary urethanisation catalysts include various amines, tin-based catalysts (such as tin carboxylates and organotin compounds), tertiary phosphines, various metal chelates, and metal salts of strong acids (such as ferric chloride, stannic chloride, stannous chloride, antimony trichloride, bismuth nitrate, and bismuth chloride). The urethanisation catalyst, when present, may be utilized in an amount less than 5 wt.%, less than 4 wt.% or less than 3 wt.%, based on the total weight of the polyisocyanate. Alternatively, the urethanisation catalyst, when present, may be utilized in an amount which is from 0.0001 to 0.1 wt.%, based on the total weight of the urethane (meth)acrylate.

Exemplary tin-based catalysts include, e.g., stannous octoate, stannous chloride, dibutyl tin diacetate, dibutyl tin dilaurate, dibutyl tin dimercaptide, dialkyl tin dialkylmercapto acids, dibutyl tin oxide and dibutyl tin dioxide.

However, in certain embodiments, a non-tin urethanisation catalyst or a combination thereof is preferred. Suitable non-tin urethanisation catalysts include, for example, one or more non-tin urethanisation catalysts selected from the group consisting of carboxylate complexes of bismuth (such as bismuth octoate); acetylacetonate complexes of zirconium; acetylacetonate complexes of hafnium; acetylacetonate complexes of titanium; beta-diketiminate complexes of zirconium; beta-diketiminate complexes of hafnium; beta-diketiminate complexes of titanium; amidinate complexes of zirconium; amidinate complexes of hafnium; amidinate complexes of titanium; carboxylate complexes of zinc; tertiary amines; imidazoles; N-heterocyclic carbenes; tetraalkylammonium (pseudo)halides; phosphines; and combinations thereof.

The formation of the isocyanate-caprolactone-diol adduct of substep b1) may be carried out at a temperature from 30 to 70°C, preferably from 50 to 65°C.

The process of the invention may further comprise a substep b2) of reacting the isocyanate-caprolactone-diol adduct with a hydroxy-functional (meth)acrylate to obtain the urethane (meth)acrylate. This substep b2) may for example be carried out by adding the hydroxy-functional (meth)acrylate into the reactor comprising the isocyanate-caprolactone-diol adduct. In some embodiments, this addition is carried out dropwise. Alternatively, this addition may be carried out batchwise where the hydroxy-functional (meth)acrylate is added to the reactor in one or more portions.

The formation of the isocyanate-hydroxy-functional (meth)acrylate adduct of substep b1') may be carried out at a temperature from 30 to 70°C, preferably from 50 to 65°C.

The process of the invention may further comprise a substep b2') of reacting the isocyanate-hydroxy-functional (meth)acrylate adduct with the caprolactone-diol to obtain the urethane (meth)acrylate. This substep b2') may for example be carried out by adding the caprolactone-diol into the reactor comprising the isocyanate-hydroxy-functional (meth) acrylate adduct. In some embodiments, this addition is carried out dropwise. Alternatively, this addition may be carried out batchwise where the caprolactone-diol is added to the reactor in one or more portions. Substep b2') may be carried out at a temperature from 60 to 110°C.

Stabilizers may be introduced during and/or after the preparation of the urethane (meth)acrylate, to protect against unwanted reactions during the preparation process and/or during storage of the resulting product. A stabilizer may be a compound or substance which retards or prevents reaction or curing of actinically polymerizable functional groups

present in a composition in the absence of actinic radiation. However, it will be advantageous to select an amount and type of stabilizer such that the urethane (meth)acrylate remains capable of being cured when exposed to actinic radiation (that is, the stabilizer does not prevent radiation curing of the composition). The stabilizer may, in particular be a free radical stabilizer (i.e. a stabilizer which functions by inhibiting free radical reactions).

Any of the stabilizers known in the art related to (meth)acrylate-functionalized compounds may be utilized in the present invention. Quinones represent a particularly preferred type of stabilizer which can be employed in the context of the present invention. As used herein, the term "quinone" includes both quinones and hydroquinones as well as ethers thereof such as monoalkyl, monoaryl, monoaralkyl and bis(hydroxyalkyl) ethers of hydroquinones. Hydroquinone monomethyl ether (MeHQ) is an example of a suitable stabilizer which can be utilized. Other stabilizers known in the art such as hydroquinone (HQ), 4-tert-butylcatechol (TBC), 3,5-di-tertiobutyl-4-hydroxytoluene (BHT), phenothiazine (PTZ), pyrogallol, phosphite compounds, triphenyl antimony and tin(II) salts.

Preferably, the process involves the use of a stabilizer such as MeHQ or BHT. When a stabilizer is used, the total amount of stabilizer may be from 0.01 to 1 wt.% based on the total weight of components a), b), c) and d).

## Curable composition

The present invention also relates to a curable composition comprising at least one urethane (meth)acrylate according to the invention or obtained according to the process of the invention, referred to as component A), and a polymerizable component other than component A), referred to as component B).

The term "curable composition" as used herein means a composition capable of being cured to provide polymerized, cured materials.

The curable composition of the invention may comprise from 1 to 99 wt.%, from 5 to 95%, from 10 to 90 wt.%, from 15 to 85 wt.%, from 20 to 80 wt.%, from 25 to 75 wt.%, from 30 to 70 wt.%, from 35 to 65 wt.% or from 40 to 60 wt.%, of component A) based on the total weight of components A) and B).

The curable composition of the invention may comprise from 1 to 99 wt.%, from 5 to 95 wt.%, from 10 to 90 wt.%, from 15 to 85 wt.%, from 20 to 80 wt.%, from 25 to 75 wt.%, from 30 to 70 wt.%, from 35 to 65 wt.% or from 40 to 60 wt.%, of component B) based on the total weight of components A) and B).

The curable composition of the invention may comprise from 1 to 99 wt.%, from 5 to 95 wt.%, from 5 to 90 wt.%, from 10 to 85 wt.%, from 10 to 80 wt.%, from 15 to 75 wt.%, from 15 to 70 wt.%, from 20 to 65 wt.% or from 20 to 60 wt.%, of component A) based on the weight of the curable composition.

The curable composition of the invention may comprise from 1 to 99 wt.%, from 5 to 95 wt.%, from 5 to 90 wt.%, from 10 to 85 wt.%, from 10 to 80 wt.%, from 15 to 75 wt.%, from 15 to 70 wt.%, from 20 to 65 wt.% or from 20 to 60 wt.%, of component B) based on the weight of the curable composition.

## Polymerizable component - component B)

The curable composition of the invention comprises a polymerizable component B).

A polymerizable component comprises or consists of one or more ethylenically unsaturated compounds. As used herein, the term "ethylenically unsaturated compound" means a compound (either monomeric or oligomeric in nature, as described below in more detail) having a polymerizable carbon-carbon double bond. A polymerizable carbon-carbon double bond is a carbon-carbon double bond that can react with another carbon-carbon double bond in a polymerization reaction. A polymerizable carbon-carbon double bond is generally comprised in a group selected from acrylate, methacrylate, cyanoacrylate, acrylamide, methacrylamide, styrene, maleate, fumarate, itaconate, allyl, propenyl, vinyl and combinations thereof, preferably selected from acrylate, methacrylate, cyanoacrylate, allyl and vinyl, more preferably selected from acrylate and methacrylate. The carbon-carbon double bonds of a phenyl ring are not considered as polymerizable carbon-carbon double bonds.

Component B) is distinct from component A).

Component B) may comprise one or more ethylenically unsaturated compounds selected from a (meth)acrylate-functionalized monomer, a (meth)acrylate-functionalized oligomer and mixtures thereof. In particular, component B) may comprise one or more (meth)acrylate functionalized monomers.

As used herein, the term "(meth)acrylate-functionalized monomer" means a monomer comprising a (meth) acrylate group. The term "(meth)acrylate-functionalized oligomer" means an oligomer comprising a (meth)acrylate group. The term "(meth)acrylate group" encompasses acrylate groups ($-O-C(=O)-CH=CH_2$) and methacrylate groups ($-O-C(=O)-C(CH_3)=CH_2$).

Component B) may comprise at least one (meth)acrylate-functionalized monomer. Component B) may comprise a mixture of (meth)acrylate-functionalized monomers.

A (meth)acrylate-functionalized monomer may have a molecular weight of less than 600 g/mol, in particular from 100 to 550 g/mol, more particularly 200 to 500 g/mol.

A (meth)acrylate-functionalized monomer may have 1 to 6 (meth)acrylate groups, in particular 1 to 3 (meth) acrylate groups.

Component B) may comprise a mixture of (meth)acrylate-functionalized monomers having different functionalities. For example component B) may comprise a mixture of a (meth)acrylate-functionalized monomer containing a single acrylate or methacrylate group per molecule (referred to herein as "mono(meth)acrylate-functionalized compounds") and a (meth)acrylate-functionalized monomer containing 2 or more, preferably 2 or 3, acrylate and/or methacrylate groups per molecule (referred to herein as "poly(meth)acrylate-functionalized compounds").

In particular, component B) may comprise a mono(meth)acrylate-functionalized monomer. The mono(meth) acrylate-functionalized monomer may advantageously function as a reactive diluent and reduce the viscosity of the composition.

Examples of suitable mono(meth)acrylate-functionalized monomers include, but are not limited to, mono-(meth) acrylate esters of aliphatic alcohols (wherein the aliphatic alcohol may be straight chain, branched or alicyclic and may be a mono-alcohol, a di-alcohol or a polyalcohol, provided only one hydroxyl group is esterified with (meth)acrylic acid); mono-(meth)acrylate esters of aromatic alcohols (such as phenols, including alkylated phenols); mono-(meth)acrylate esters of alkylaryl alcohols (such as benzyl alcohol); mono-(meth)acrylate esters of oligomeric and polymeric glycols such as diethylene glycol, triethylene glycol, dipropylene glycol, tripropylene glycol, polyethylene glycol, and polypropylene glycol); mono-(meth)acrylate esters of monoalkyl ethers of glycols and oligoglycols; mono-(meth)acrylate esters of alkoxylated (e.g., ethoxylated and/or propoxylated) aliphatic alcohols (wherein the aliphatic alcohol may be straight chain, branched or alicyclic and may be a mono-alcohol, a di-alcohol or a polyalcohol, provided only one hydroxyl group of the alkoxylated aliphatic alcohol is esterified with (meth)acrylic acid); mono-(meth)acrylate esters of alkoxylated (e.g., ethoxylated and/or propoxylated) aromatic alcohols (such as alkoxylated phenols); caprolactone mono(meth)acrylates; and the like.

The following compounds are specific examples of mono(meth)acrylate-functionalized monomers suitable for use in component B): methyl (meth)acrylate; ethyl (meth)acrylate; n-propyl (meth)acrylate; n-butyl (meth)acrylate; isobutyl (meth)acrylate; n-hexyl (meth)acrylate; 2-ethylhexyl (meth)acrylate; n-octyl (meth)acrylate; isooctyl (meth) acrylate; n-decyl (meth)acrylate; n-dodecyl (meth)acrylate; tridecyl (meth)acrylate; tetradecyl (meth)acrylate; hexadecyl (meth)acrylate; 2-hydroxyethyl (meth)acrylate; 2- and 3-hydroxypropyl (meth)acrylate; 2-methoxyethyl (meth)acrylate; 2-ethoxyethyl (meth)acrylate; 2- and 3-ethoxypropyl (meth)acrylate; tetrahydrofurfuryl (meth)acrylate; alkoxylated tetrahydrofurfuryl (meth)acrylate; 2-(2-ethoxyethoxy)ethyl (meth)acrylate; cyclohexyl (meth)acrylate; glycidyl (meth)acrylate; isodecyl (meth)acrylate; lauryl (meth)acrylate; 2-phenoxyethyl (meth)acrylate; alkoxylated phenol (meth)acrylates; alkoxylated nonylphenol (meth)acrylates; cyclic trimethylolpropane formal (meth)acrylate; isobornyl (meth)acrylate; tricyclodecanemethanol (meth)acrylate; tert-butylcyclohexanol (meth)acrylate; trimethylcyclohexanol (meth)acrylate; diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; ethoxylated lauryl (meth)acrylate; methoxy polyethylene glycol (meth)acrylates; 3-(2-hydroxyalkyl)oxazolidinone (meth)acrylates; and combinations thereof.

Component B) may comprise a poly(meth)acrylate-functionalized monomer.

A poly(meth)acrylate-functionalized monomer may have from 2 to 6 (meth)acrylate groups.

Examples of suitable poly(meth)acrylate-functionalized monomers include acrylate and methacrylate esters of polyols selected from ethylene glycol, di-, tri- or tetraethylene glycol, 1,2- or 1,3-propylene glycol, di-, tri- or tetra(1,2-propylene glycol), di-, tri- or tetra(1,3-propylene glycol), 1,2-, 1,3- or 1,4-butylene glycol, di-, tri- or tetra(1,4-butylene glycol), 1,5-pentanediol, 1,6-hexanediol, 1,7-heptanediol, 1,8-octanediol, 1,9-nonanediol, 1,10-decanediol, 1,12-dodecanediol, 2-methyl-1,3-propanediol, 2,2-dimethyl-1,3-propanediol, 2,2-diethyl-1,3-propanediol, 2-methyl-2-ethyl-1,3-propanediol, 3-methyl-1,5-pentanediol, 3,3-dimethyl-1,5-pentanediol, 2,4-diethyl-1,5-pentanediol, 3-butyl-3-ethyl-1,5-pentane diol, 2,2,4-trimethyl 1,5-pentanediol, cyclohexanediol, cyclohexane-1,4-dimethanol, norbornene dimethanol, norbornane dimethanol, tricyclodecanediol, tricyclodecane dimethanol, hydrogenated bisphenol A, B, F or S, a dianhydrohexitol (i.e. isosorbide, isomannide, isoidide), as well as the alkoxylated (i.e. ethoxylated and/or propoxylated) derivatives thereof with up to four oxyalkylene units. Such polyols may be fully or partially esterified (with (meth)acrylic acid, (meth)acrylic anhydride, (meth)acryloyl chloride or the like), provided they contain at least two (meth)acrylate functional groups per molecule.

Exemplary poly(meth)acrylate-functionalized monomers may include bisphenol A di(meth)acrylate; hydrogenated bisphenol A di(meth)acrylate; ethylene glycol di(meth)acrylate; diethylene glycol di(meth)acrylate; triethylene glycol di(meth)acrylate; tetraethylene glycol di(meth)acrylate; polyethylene glycol di(meth)acrylate; propylene glycol di(meth) acrylate; dipropylene glycol di(meth)acrylate; tripropylene glycol di(meth)acrylate; tetrapropylene glycol di(meth)acrylate; polypropylene glycol di(meth)acrylate; polytetramethylene glycol di(meth)acrylate; 1,2-butanediol di(meth)acrylate; 2,3-butanediol di(meth)acrylate; 1,3-butanediol di(meth)acrylate; 1,4-butanediol di(meth)acrylate; 1,5-pentanediol di(meth) acrylate; 1,6-hexanediol di(meth)acrylate; 1,8-octanediol di(meth)acrylate; 1,9-nonanediol di(meth)acrylate; 1,10-nonanediol di(meth)acrylate; 1,12-dodecanediol di(meth)acrylate; neopentyl glycol di(meth)acrylate; 2-methyl-2,4-pentanediol di(meth)acrylate; polybutadiene di(meth)acrylate; cyclohexane-1,4-dimethanol di(meth)acrylate; tricyclodecane dimethanol di(meth)acrylate; glyceryl di(meth)acrylate; glyceryl tri(meth)acrylate; trimethylolethane tri(meth)acrylate; trimethylolethane di(meth)acrylate; trimethylolpropane tri(meth)acrylate; trimethylolpropane di(meth)acrylate; pentaerythritol di(meth)acrylate; pentaerythritol tri(meth)acrylate; pentaerythritol tetra(meth)acrylate, di(trimethylolpropane) diacrylate; di(trimethylolpropane) triacrylate; di(trimethylolpropane) tetraacrylate, sorbitol penta(meth)acrylate; di(pentaerythritol) tetraacrylate; di(pentaerythritol) pentaacrylate; di(pentaerythritol) hexa(meth)acrylate; tris (2-hydroxyethyl) isocyanurate tri(meth)acrylate; as well as the alkoxylated (e.g., ethoxylated and/or propoxylated) derivatives thereof; and combinations thereof.

In a preferred embodiment, component B) comprises at least one poly(meth)acrylate-functionalized monomer selected from glycerol tri(meth)acrylate; diglycerol tetra(meth)acrylate, triglycerol penta(meth)acrylate, tetraglycerol hexa(meth)acrylate, trimethylolethane tri(meth)acrylate; trimethylolpropane tri(meth)acrylate; pentaerythritol tetra(meth)acrylate, di(trimethylolpropane) tetraacrylate, sorbitol penta(meth)acrylate; di(pentaerythritol) hexa(meth)acrylate; tris (2-hydroxyethyl) isocyanurate tri(meth)acrylate, as well as the alkoxylated (e.g., ethoxylated and/or propoxylated) derivatives thereof, and combinations thereof.

Component B) may comprise a urethane di(meth)acrylate monomer.

A urethane di(meth)acrylate monomer may have 2 (meth)acrylate groups and two urethane bonds. A urethane di(meth)acrylate monomer may be the reaction product of a diisocyanate and a hydroxyalkyl (meth)acrylate. The diisocyanate and the hydroxylalkyl (meth)acrylate may be as described above for component A).

In particular, component B) may comprise a urethane di(meth)acrylate monomer according to the following formula:

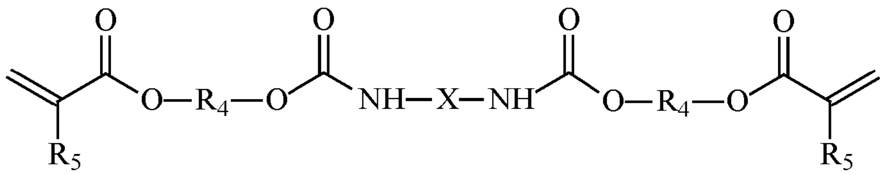

wherein

- $R_4$ is $-CH_2-CH_2-$, $-CH_2-CH(CH_3)-$ or $-CH(CH_3)-CH_2-$, preferably $-CH_2-CH_2-$;
- $R_5$ is H or methyl, preferably methyl;
- X is the residue of a diisocyanate, preferably the residue of isophorone diisocyanate or 2,2,4- or 2,4,4-trimethylhexamethylene diisocyanate.

In a preferred embodiment, component B) comprises one or more (meth)acrylate-functionalized monomers selected from a mono(meth)acrylate-functionalized monomer (preferably a hydroxalkyl (meth)acrylate such as 2-hydroxyethyl (meth)acrylate and/or 2- or 3-hydroxypropyl (meth)acrylate), a urethane di(meth)acrylate monomer and mixtures thereof.

In a preferred embodiment, component B) comprises one or more (meth)acrylate-functionalized monomers selected from tertiobutyl cyclohexyl acrylate (TBCHA) (SR217), tricyclodecanemethanol acrylate (TCDA) (SR789), isobornyl acrylate (IBOA) (Sarbio5102), 3,3,5-trimethyl cyclohexyl acrylate (TMCHA) (SR420), HEA, HEMA, HPA, caprolactone acrylate (CAPA) (SR495B), tripropylene glycol diacrylate (TPGDA) (SR306), dipropylene glycol diacrylate (DPGDA) (sr508), tripropylene glycol diacrylate (TPGDA) (SR306), ethoxylated 4 bisphenol A dimethacrylate (BPA4EODMA) (SR540), ethoxylated 3 bisphenol A dimethacrylate (BPA3EODMA) (SR348C), ethoxylated 2 bisphenol A dimethacrylate (BPA2EODMA) and mixtures thereof.

Component B) may comprise 1 to 100 wt.%, in particular 5 to 90 wt.%, more particularly 10 to 80 wt.%, even more particularly 15 to 75 wt.%, more particularly still 20 to 70 wt.% of (meth)acrylate-functionalized monomer, based on the total weight of the component B). In particular, component B) may comprise 50 to 100 wt.% or 55 to 100 wt.% or 60 to 100 wt.% or 65 to 100 wt.% or 70 to 100 wt.% of (meth)acrylate-functionalized monomer, based on the total weight of component B).

Component B) may comprise a (meth)acrylate-functionalized oligomer. Component B) may comprise a mixture of (meth)acrylate-functionalized oligomers.

A (meth)acrylate-functionalized oligomer may be selected in order to enhance the flexibility, strength and/or modulus, among other attributes, of a cured polymer prepared by curing the curable composition of the invention.

A (meth)acrylate functionalized oligomer may have 1 to 18 (meth)acrylate groups, in particular 2 to 6 (meth) acrylate groups, more particularly 2 to 6 acrylate groups.

A (meth)acrylate functionalized oligomer may have a number average molecular weight equal or more than 600 g/mol, in particular 800 to 15,000 g/mol, more particularly 1,000 to 5,000 g/mol.

In particular, component B) may comprise a (meth)acrylate-functionalized oligomer selected from the group consisting of epoxy (meth)acrylates, polyester (meth)acrylates, polyether (meth)acrylates, urethane (meth)acrylates, (meth)acrylated poly(meth)acrylates and mixtures thereof.

Non-limiting examples of epoxy (meth)acrylates are the reaction products of an epoxide (such as glycidyl ethers, glycidyl esters, cycloaliphatic epoxides or epoxides obtained by epoxidation of mono- and/or polyunsaturated compounds) with a (meth)acrylating agent (such as (meth)acrylic acid, (meth)acrylic anhydride, (meth)acryloyl chloride or combinations thereof). The epoxide may be selected from 1,2,3,4-diepoxybutane; 1,2,4,5-diepoxypentane; 1,2,5,6-diepoxyhexane; 1,2,7,8-diepoxyoctane; 1,2,9,10-diepoxydecane; bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolak resin, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexanecarboxylate, 2-(3,4-epoxycyclohexyl-5,5-spiro-3,4-epoxy)cyclohexane-1,4-dioxane, bis(3,4-epoxycyclohexylmethyl)adipate, vinylcyclohexene oxide, 4-vinylepoxycyclohexane, bis(3,4-epoxy-6-methylcyclohexylmethyl)adipate,3,4-epoxy-6-methylcyclohexy 1-3',4'-epoxy-6'-methylcyclohexanecarboxylate, methylenebis(3,4-epoxycyclohexane), dicyclopentadiene diepoxide, di(3,4-epoxycyclohexylmethyl) ether of ethylene glycol, ethylenebis(3, 4-epoxycyclohexanecarboxylate), ethylene glycol diglycidyl ether, 1,2- or 1,3-propylene glycol diglycidyl ether, 1,2-, 1,3- or 1,4-butanediol diglycidyl ether, 1,5-pentanediol diglycidyl ether, 1,6-hexanediol diglycidyl ether, 1,7-hexanediol diglycidyl ether, 1,8-octanediol diglycidyl ether, 1,9-nonanediol diglycidyl ether, 1,10-decanediol diglycidyl ether, 1,12-dodecanediol diglycidyl ether, 2-methyl-1,3-propanediol diglycidyl ether, neopentyl glycol diglycidyl ether, 2,2-diethyl-1,3-propane diol diglycidyl ether, 3-methyl-1,5-pentanediol diglycidyl ether, 3,3-dimethyl-1,5-pentanediol diglycidyl ether, 2,4-diethyl-1,5-pentanediol diglycidyl ether, 3,3-butylethyl-1,5-pentane diol diglycidyl ether, di-, tri- or tetra(ethylene glycol) diglycidyl ether, di-, tri- or tetra(1,2-propylene glycol) diglycidyl ether, di-, tri- or tetra(1,3-propylene glycol) diglycidyl ether, di-, tri- or tetra(1,4-butylene glycol) diglycidyl ether, a polyethylene glycol) diglycidyl ether, a polypropylene glycol) diglycidyl ether, a poly(trimethylene glycol) diglycidyl ether, a poly(tetramethylene glycol) diglycidyl ether, a polyethylene glycol-co-propylene glycol) diglycidyl ether, glycerol triglycidyl ether, a polyglycerol polyglycidyl ether, trimethylolmethane triglycidyl ether, trimethylolethane triglycidyl ether, trimethylolpropane triglycidyl ether, di(trimethylolpropane) tetraglycidyl ether, pentaerythritol tetraglycidyl ether, diglycidyl cyclohexanedicarboxylate, cyclohexane diglycidyl ether, cyclohexane-1,4-dimethanol diglycidyl ether, tricyclodecane dimethanol diglycidyl ether, isosorbide diglycidyl ether, pyrocatechol diglycidyl ether, resorcinol diglycidyl ether, cardol diglycidyl ether, phloroglucinol triglycidyl ether, pyrogallol triglycidyl ether, tris(hydroxyphenyl)methane triglycidyl ether, tris(hydroxyphenyl)ethane triglycidyl ether, diglycidyl phthalate, diglycidyl terephthalate, diglycidyl isophthalate, polyglycidyl ethers of a polyether polyol obtained by the addition of one or more alkylene oxides to an aliphatic polyhydric alcohol such as ethylene glycol, propylene glycol, and glycerol, diglycidyl esters of aliphatic long-chain (C6-C22) dibasic acids, monoglycidyl ethers of aliphatic higher alcohols, monoglycidyl ethers of phenol, cresol, butyl phenol, or polyether alcohols obtained by the addition of alkylene oxide to these compounds, glycidyl esters of higher fatty acids, an epoxidized vegetable oil (such as epoxidized soybean oil and epoxidized linseed oil), epoxybutylstearic acid, epoxyoctylstearic acid, epoxidized polybutadiene, triglycidyl isocyanurate and the like.

Non-limiting examples of polyester (meth)acrylates are the reaction products of a hydroxyl group-terminated polyester polyol with a (meth)acrylating agent (such as (meth)acrylic acid, (meth)acrylic anhydride, (meth)acryloyl chloride or combinations thereof). The reaction process may be conducted such that a significant concentration of residual hydroxyl groups remain in the polyester (meth)acrylate or may be conducted such that all or essentially all of the hydroxyl groups of the polyester polyol have been (meth)acrylated. The polyester polyols can be made by polycondensation reactions of a polyhydroxyl functional component (in particular a diol) and a polycarboxylic acid functional compound (in particular, a dicarboxylic acid or anhydride). To prepare the polyester (meth)acrylates, the hydroxyl groups of the polyester polyol are then partially or fully esterified by reacting with the (meth)acrylating agent. Polyester (meth)acrylates may also be synthesized by reacting a hydroxyl-containing (meth)acrylate such as a hydroxyalkyl (meth)acrylate (e.g., hydroxyethyl acrylate) with a polycarboxylic acid. The polyhydroxyl functional and polycarboxylic acid functional components can each have linear, branched, cycloaliphatic or aromatic structures and can be used individually or as mixtures.

Non-limiting examples of polyether (meth)acrylates are the condensation reaction products of a polyetherol which is a polyether polyol with a (meth)acrylating agent (such as (meth)acrylic acid, (meth)acrylic anhydride, (meth) acryloyl chloride or combinations thereof). Suitable polyetherols can be linear or branched substances containing ether bonds and terminal hydroxyl groups. Polyetherols can be prepared by ring opening polymerization of epoxides and other oxygen-containing heterocyclic compounds (e.g., ethylene oxide, 1,2-propylene oxide, butene oxide, tetrahydrofuran and combinations thereof) with a starter molecule. Suitable starter molecules include water, hydroxyl functional materials, polyester polyols and amines. Polyetherols may also be obtained by the condensation of diols such as glycols.

Non-limiting examples of urethane (meth)acrylates are the condensation reaction products of at least one polyisocyanate (e.g., diisocyanate, triisocyanate), at least one polyol (such as a polyether polyol or a polyester polyol) and a hydroxy-functional (meth)acrylate (such as 2-hydroxyethyl (meth)acrylate and/or 2-, or 3-hydroxypropyl (meth)acrylate) to provide terminal (meth)acrylate groups. For example, the urethane (meth)acrylate may contain two, three, four or more

(meth)acrylate groups per molecule. The order of addition of the components to prepare the urethane (meth)acrylate is well known in the art. For example, the hydroxyl-functionalized (meth)acrylate may be first reacted with the polyisocyanate to obtain an isocyanate-functionalized (meth)acrylate, which is then reacted with the polyol. In yet another embodiment, the polyisocyanate may be first reacted with the polyol to obtain an isocyanate-functionalized polyol, which is thereafter reacted with a hydroxyl-functionalized (meth)acrylate. Alternatively, all the components may be combined and reacted at the same time.

Non-limiting examples of (meth)acrylated poly(meth)acrylates are substances having an oligomeric (meth) acrylic backbone which is functionalized with one or (meth)acrylate groups (which may be at a terminus of the oligomer or pendant to the acrylic backbone). The (meth)acrylic backbone may be a homopolymer, random copolymer or block copolymer comprised of repeating units of (meth)acrylic monomers. The (meth)acrylic monomers may be any monomeric (meth)acrylate such as C1-C6 alkyl (meth)acrylates as well as functionalized (meth)acrylates such as (meth)acrylates bearing hydroxyl, carboxylic acid and/or epoxy groups. (Meth)acrylated poly(meth)acrylates may be prepared using any procedures known in the art, such as by oligomerizing (meth)acrylic monomers, at least a portion of which are functionalized with hydroxyl, carboxylic acid and/or epoxy groups (e.g., hydroxyalkyl(meth)acrylates, (meth)acrylic acid, glycidyl (meth)acrylate) to obtain a functionalized poly(meth)acrylate, which is then reacted with one or more (meth) acrylate-containing reactants to introduce the desired (meth)acrylate functional groups.

Component B) may comprise 0 to 100 wt.%, in particular 10 to 95 wt.%, more particularly 20 to 90 wt.%, even more particularly 25 to 85 wt.%, more particularly still 30 to 80 wt.% of (meth)acrylate-functionalized oligomer, based on the total weight of the component B). In particular, component B) may comprise 0 to 50 wt.% or 0 to 45 wt.% or 0 to 40 wt.% or 0 to 35 wt.% or 0 to 30 wt.%, of (meth)acrylate-functionalized oligomer, based on the total weight of component B).

Component B) may comprise one or more ethylenically unsaturated compounds other than a (meth)acrylate-functionalized monomer or oligomer. Examples of such ethylenically unsaturated compounds include:

- polyvinylic and/or polyallylic monomers (in particular divinyl benzene, 1,4-butanediol divinyl ether, tri(ethylene glycol) divinyl ether, diallyl ether, glycerol diallyl ether, glycerol triallyl ether, trimethylolpropane diallyl ether, trimethylolpropane triallyl ether, pentaerythritol triallyl ether, pentaerythritol tetraallyl ether, diallyl phthalate, triallyl isocyanurate, 2,4,6-triallyloxy-1,3,5-triazine, glyoxal bis(diallyl acetal) and mixtures thereof);
- vinyl esters of carboxylic acids (in particular vinyl acetate, vinyl propionate, vinyl hexanoate, vinyl 2-ethylhexanoate, vinyl octanoate, vinyl pelargonate, vinyl laurate, vinyl stearate, a vinyl ester of versatic acid and mixtures thereof);
- vinyl ethers (in particular vinyl methyl ether, vinyl ethyl ether, vinyl n-butyl ether, vinyl isobutyl ether and mixtures thereof, ethylene glycol divinyl ether, triethylene glycol divinyl ether and trimethylolpropane trivinyl ether);
- cycloaliphatic vinyl monomers (in particular vinylcyclohexane);
- olefins (in particular ethylene, propene, 1-butene, isobutylene, diisobutylene, 1-nonene, 1-decene and mixtures thereof);
- conjugated dienes (in particular butadiene, isoprene, pentadiene, chlorodiene and mixtures thereof);
- vinyl aromatic monomers (in particular styrene, alpha-methylstyrene, tert-butylstyrene, ortho-, meta-, and para-methylstyrene, ortho-, meta- and para-ethylstyrene, o-methyl-p-isopropylstyrene, p-chlorostyrene, p-bromostyrene, o,p-dichlorostyrene, o,p-dibromostyrene, ortho-, meta- and para-methoxystyrene, optionally substituted indenes, optionally substituted vinylnaphthalenes, acenaphthylene, diphenylethylene, vinyl anthracene and mixtures thereof);
- mono- or dicarboxylic acid monomers, cyclic anhydride monomers and salts thereof (in particular 3-butenoic acid, crotonic acid, vinyl acetic acid, fumaric acid, maleic acid, maleic anhydride, tetrahydrophthalic acid, tetrahydrophthalic anhydride, itaconic acid, mesaconic acid, citraconic acid, glutaconic acid, muconic acid and mixtures thereof);
- unsaturated polymers such as polybutadiene;
- as well as the alkoxylated (e.g., ethoxylated and/or propoxylated) derivatives thereof
- and mixtures thereof.

Other components

The curable composition of the invention may further comprise one or more other components selected from:

- an initiator component;
- an additive component;
- a solvent component;

and mixtures thereof.

*Initiator component*

The curable composition of the present invention may comprise an initiator component. An initiator component is a component comprising or consisting of one or more compounds selected from an initiator, a sensitizer, an amine synergist and mixture thereof.

The initiator component may comprise one or more initiators selected from a photoinitiator and a radical initiator.

Photoinitiators are compounds that can generate free radicals upon exposure to light of an appropriate wavelength and/or intensity. Photoinitiators can adopt two different modes of action, and are classified by mode of action as Norrish Type I and Norrish Type II photoinitiators. As used herein, the term "activity" with reference to Norrish Type I and Norrish Type II activity is intended to relate to Norrish photoinitiation and analogous reactions. For instance, a photoinitiator having Norrish Type I activity within the scope of this invention would be a photoinitiator characterized by a cleavage reaction into two radical fragments of the original photoinitiator on exposure to light. For an initiator having Norrish Type II activity, exposure to light causes the abstraction of an atom, such as hydrogen, to generate the radical.

Radical initiators are compounds capable of generating free radicals through various mechanisms such as exposure to heat and/or to a reducing agent and/or to a redox couple. Peroxides and azo compounds are examples of radical initiators.

The initiator component may comprise one or more photoinitiators, in particular one or more photoinitiators having Norrish type I activity and/or Norrish type II activity, more particularly one or more photoinitiators having Norrish type I activity.

Non-limiting types of photoinitiators suitable for use in the curable compositions of the present invention include, for example, benzoins, benzoin ethers, acetophenones, $\alpha$-hydroxy acetophenones, benzyl, benzyl ketals, anthraquinones, phosphine oxides, acylphosphine oxides, $\alpha$-hydroxyketones, phenylglyoxylates, $\alpha$-aminoketones, benzophenones, thioxanthones, xanthones, acridine derivatives, phenazene derivatives, quinoxaline derivatives, triazine compounds, benzoyl formates, aromatic oximes, metallocenes, acylsilyl or acylgermanyl compounds, camphorquinones, polymeric derivatives thereof, and mixtures thereof.

Examples of suitable photoinitiators include, but are not limited to, 2-methylanthraquinone, 2-ethylanthraquinone, 2-chloroanthraquinone, 2-benzyanthraquinone, 2-t-butylanthraquinone, 1,2-benzo-9,10-anthraquinone, benzyl, benzoins, benzoin ethers, benzoin, benzoin methyl ether, benzoin ethyl ether, benzoin isopropyl ether, alpha-methylbenzoin, alpha-phenylbenzoin, Michler's ketone, acetophenones such as 2,2-dialkoxybenzophenones and 1-hydroxyphenyl ketones, benzophenone, 4,4'-bis-(diethylamino) benzophenone, acetophenone, 2,2-diethyloxyacetophenone, diethyloxyacetophenone, 2-isopropylthioxanthone, thioxanthone, diethyl thioxanthone, 1,5-acetonaphthylene, benzil ketone, $\alpha$-hydroxy keto, 2,4,6-trimethylbenzoyldiphenyl phosphine oxide, benzyl dimethyl ketal, 2,2-dimethoxy-1,2-diphenylethanone, 1-hydroxycylclohexyl phenyl ketone, 2-methyl-1-[4-(methylthio) phenyl]-2-morpholinopropanone-1, 2-hydroxy-2-methyl-1-phenyl-propanone, oligomeric $\alpha$-hydroxy ketone, benzoyl phosphine oxides, phenylbis(2,4,6-trimethylbenzoyl)phosphine oxide, ethyl(2,4,6-trimethylbenzoyl)phenyl phosphinate, anisoin, anthraquinone, anthraquinone-2-sulfonic acid, sodium salt monohydrate, (benzene) tricarbonylchromium, benzil, benzoin isobutyl ether, benzophenone/1-hydroxycyclohexyl phenyl ketone, 50/50 blend, 3,3',4,4'-benzophenonetetracarboxylic dianhydride, 4-benzoylbiphenyl, 2-benzyl-2-(dimethylamino)-4'-morpholinobutyrophenone, 4,4'-bis(diethylamino)benzophenone, 4,4'-bis(dimethylamino)benzophenone, camphorquinone, 2-chlorothioxanthen-9-one, dibenzosuberenone, 4,4'-dihydroxybenzophenone, 2,2-dimethoxy-2-phenylacetophenone, 4-(dimethylamino)benzophenone, 4,4'-dimethylbenzil, 2,5-dimethylbenzophenone, 3,4-dimethylbenzophenone, diphenyl(2,4,6-trimethylbenzoyl)phosphine oxide /2-hydroxy-2-methylpropiophenone, 50/50 blend, 4'-ethoxyacetophenone, 2,4,6-trimethylbenzoyldiphenylphophine oxide, phenyl bis(2,4,6-trimethyl benzoyl)phosphine oxide, ferrocene, 3'-hydroxyacetophenone, 4'-hydroxyacetophenone, 3-hydroxybenzophenone, 4-hydroxybenzophenone, 1-hydroxycyclohexyl phenyl ketone, 2-hydroxy-2-methylpropiophenone, 2-methylbenzophenone, 3-methylbenzophenone, methybenzoylformate, 2-methyl-4'-(methylthio)-2-morpholinopropiophenone, phenanthrenequinone, 4'-phenoxyacetophenone, (cumene)cyclopentadienyl iron(ii) hexafluorophosphate, 9,10-diethoxy and 9,10-dibutoxyanthracene, 2-ethyl-9,10-dimethoxyanthracene, thioxanthen-9-one and combinations thereof.

In particular, the initiator component may comprise a photoinitiator selected from a benzophenone such as SpeedCure® BP (benzophenone), SpeedCure® 7005 (polymeric benzophenone), SpeedCure® 7006 (polymeric benzophenone), SpeedCure® EMK (4,4'-bis(diethylamino)benzophenone) or SpeedCure® BMS (4-benzoyl-4'-methyldiphenyl sulphide); a thioxanthone such as SpeedCure® 7010 (polymeric thioxanthone), SpeedCure® ITX (isopropyl thioxanthone), SpeedCure® DETX (2,4-diethylthioxanthone) or SpeedCure® CPTX (1-chloro-4-propoxythioxanthone); an $\alpha$-hydroxy acetophenone; an acylphosphine oxide such as SpeedCure® BPO (phenyl bis(2,4,6-trimethylbenzoyl)-phosphine oxide), SpeedCure® TPO (2,4,6-trimethylbenzoyldiphenylphosphine oxide) or SpeedCure® TPO-L (ethyl (2,4,6-trimethylbenzoyl)phenyl phosphinate); a phenylglyoxylate such as SpeedCure® MBF (methylbenzoylformate); and mixtures thereof.

When the initiator component comprises a photoinitiator, one or more photosensitizers and/or amine synergists

may also be desired.

A photosensitizer is a compound that, upon irradiation with light, transfers energy to another compound of the curable composition and returns to its initial state. A photosensitizer may be chemically unchanged after the polymerization as it has not reacted with other chemical species. A photosensitizer may improve the photoinitiating activity of a photoinitiator.

An amine synergist may be a compound comprising a hydrogen atom in alpha position to a heteroatom such as N or S. Amine synergists may be added to a curable composition to effect a faster cure rate if desired. Amine synergists may in particular act as hydrogen donors for Norrish type II chromophores. Non limiting examples of amine synergists include tertiary amines and polythiols such as ethylhexyl-dimethylaminobenzoate (SpeedCure®) EHA), triethanolamine, pentaerythritoltetrakis-3-mercaptopropionate or amino-acrylates obtained by reaction of a primary or secondary amine with an acrylate-functionalized monomer or oligomer (such as CN174 (Sartomer) and CN186 (Sartomer)).

The initiator component may comprise one or more radical initiators, preferably one or more radical initiators selected from peroxides and azo-compounds, more preferably peroxides.

Peroxides (i.e., compounds comprising an oxygen-oxygen single bond) are another type of initiators well known in the art. They notably include inorganic persulfate compounds such as ammonium persulfate, potassium persulfate and sodium persulfate; hydrogen peroxide; organic peroxides such as cumene hydroperoxide, t-butyl hydroperoxide, di-t-butyl peroxide, acetyl peroxide, benzoyl peroxide, lauroyl peroxide; peracids such as peracetic acid and perbenzoic acid. Peroxides may generate a free radical by heating and/or by adding a reducing agent such as a ferrous compound that promotes the decomposition of a peroxide. Other radical initiators are azo-initiators (i.e., compounds comprising an nitrogen-nitrogen double bond), for example 2,2'-azobisisobutyronitrile, 4,4'-azobis(4-cyanovaleric acid) or 2,2'-azobis(2-methylbutyronitrile); and combinations thereof.

The curable composition of the present invention may comprise from 0 to 10 wt.% of initiator component, for example from 0.2 to 9 wt.%, from 0.5 to 8 wt.%, or from 1 to 6 wt.%, of initiator component based on the total weight of the curable composition.

*Additive component*

The curable composition of the present invention may comprise an additive component. An additive component is a component comprising or consisting of one or more additives.

The additive component may comprise one or more additives selected from stabilizers (such as antioxidants, light blockers/absorbers or polymerization inhibitors), foam inhibitors, flow or leveling agents, colorants, pigments, dispersants (wetting agents, surfactants), slip additives, fillers, thixotropic agents, matting agents, impact modifiers, waxes and mixtures thereof; and any other additive conventionally used in the coating, sealant, molding, dental, composites or 3D printing arts.

The additive component may comprise a stabilizer such as an antioxidant, a light blocker/absorber or a polymerization inhibitor.

Stabilizers may be as described above in the process of preparing the urethane (meth)acrylate.

The concentration of stabilizer in the curable composition will vary depending upon the particular stabilizer or combination of stabilizers selected for use and also on the degree of stabilization desired and the susceptibility of components in the curable compositions towards degradation in the absence of stabilizer. Typically, however, the curable composition is formulated to comprise from 5 to 5000 ppm stabilizer.

The additive component may comprise one or more fillers, in particular one or more inorganic fillers. As used herein, a filler is an inorganic and/or organic particle which may be used to adjust the viscosity of the curable composition as well as the mechanical and/or optical properties of the cured material. The filler or fillers preferably has/have a D50 particle size of less than 25 μm, preferably less than 10 μm and particularly preferably less than 5 μm. In a preferred embodiment, the curable composition contains a mixture of two or more fillers having different particle sizes. Such mixtures advantageously prevent an undesirable increase of viscosity of the compositions thus facilitating their use in 3D printing methods.

Examples of inorganic fillers include marble, granite, quartz, diatomaceous earth, feldspar, mica, gypsum, glass, rock flour, limestone, ceramic, clay, sand, silica, alumina, titanium dioxide, magnesium oxide, zirconia, talc, aluminum hydroxide, magnesium hydroxide, calcium hydroxide, zirconium hydroxide, calcium phosphate, calcium carbonate, barium sulfate, hydroxyapatite, zeolite, and mixtures thereof. Examples of organic fillers include waxes, in particular carnauba wax, and polymer particles such as polymethyl methacrylate (PMMA) particles. The surface of the fillers can be modified in order to enhance the compatibility/dispersibility of the fillers in the curable composition. Surface-modification may be carried out by chemically bonding compounds bearing functional groups (namely acid groups, silyl groups and/or (meth)acrylate groups) to the surface of the fillers.

The curable composition of the present invention may comprise from 0 to 60 wt.% of additive component, for example from 5 to 50 wt.%, from 10 to 40 wt.%, or from 15 to 30 wt.%, of additive component, based on the total weight of the curable composition.

*Solvent component*

The curable composition of the invention may comprise a solvent component. A solvent component is a component comprising or consisting of one or more solvents. As used herein, the term "solvent" means a non-reactive organic solvent, i.e. a solvent that does not react with the other components of the curable composition.

Examples of suitable solvents include aliphatic hydrocarbons such n-pentane, n-hexane, n-heptane, octane cyclohexane or methylcyclohexane; aromatic hydrocarbons such as benzene toluene or xylene; halogenated hydrocarbons such as dichloromethane, chloroform ortrichlororethane; ketones such as acetone, methyl ethyl ketone, methylpropylketone, diethylketone, methylisobutylketone, ethylbutylketone, cyclopentanone or cyclohexanone; esters such as methyl formate, butyl formate, methyl acetate, ethyl acetate, propyl acetate or butyl acetate; ethers such as diethyl ether, diisopropyl ether, dibutyl ether, ethylene glycol diethyl ether, tetrahydrofuran or tetrahydropyrane; carbonates such as diethylcarbonate; and combinations thereof.

Advantageously, the curable composition of the present invention may be formulated to be substantially free of a solvent. For example, the curable composition may contain little or no solvent, e.g., less than 10 wt.%, or less than 5 wt.%, or less than 1 wt.%, or even 0 wt.% of solvent, based on the total weight of the curable composition.

According to some embodiments, the curable composition is a liquid at 25°C. In various embodiments of the invention, the curable compositions described herein are formulated to have a viscosity of less than 10,000 mPa.s, or less than 5,000 mPa.s, or less than 1,000 mPa.s, or less than 500 mPa.s, or less than 250 mPa.s, or even less than 100 mPa.s as measured at 25°C using a Brookfield viscometer, model DV-II, using a 27 spindle (with the spindle speed varying typically between 20 and 200 rpm, depending on viscosity). In advantageous embodiments of the invention, the viscosity of the curable composition is from 10 to 10,000 mPa.s, or from 10 to 5,000 mPa.s, or from 10 to 1,000 mPa.s, or from 10 to 500 mPa.s, or from 10 to 250 mPa.s, or from 10 to 100 mPa.s at 25°C.

End-use applications

The present invention also relates to the use of the curable composition of the present invention as a coating composition, a sealant composition, a molding composition, a dental composition, a composite material composition or a 3D printing composition.

The present invention also relates to a method of using the curable composition described herein as a coating composition, a sealant composition, a molding composition, a dental composition, a composite material composition or a 3D printing composition.

Cured composition and method of making

The present invention also relates to the method of making a cured composition, comprising curing the curable composition of the present invention.

In some embodiments, the method comprises exposing the curable composition to radiation such UV, near-UV, visible, infrared, near-infrared and/or electron beam radiation or heat.

Prior to curing, the curable composition may be applied to a substrate surface in any known conventional manner, for example, by spraying, knife coating, roller coating, casting, drum coating, dipping, and the like and combinations thereof. Indirect application using a transfer process may also be used. A substrate may be any commercially relevant substrate, such as a high surface energy substrate or a low surface energy substrate, such as a metal substrate or plastic substrate, respectively. The substrates may comprise metal, paper, cardboard, glass, thermoplastics such as polyolefins, polycarbonate, acrylonitrile butadiene styrene (ABS), and blends thereof, composites, wood, leather and combinations thereof. When used as an adhesive, the curable composition may be placed between two substrates and then cured, the cured composition thereby bonding the substrates together to provide an adhered article. Curable compositions in accordance with the present invention may also be formed or cured in a bulk manner (e.g., the curable composition may be cast into a suitable mold and then cured).

Curing may be accelerated or facilitated by supplying energy to the curable composition, such as by heating the curable composition and/or by exposing the curable composition to a radiation source, such as visible or UV light, infrared radiation, and/or electron beam radiation. Thus, the cured composition may be deemed the reaction product of the curable composition, formed by curing. A curable composition may be partially cured by exposure to actinic radiation, with further curing being achieved by heating the partially cured article. For example, an article formed from the curable composition (e.g., a 3D printed article) may be heated at a temperature of from 40°C to 120°C for a period of time of from 5 minutes to 12 hours.

The present invention also relates to the cured composition obtained by curing the curable composition of the present invention.

Articles

The present invention also relates to articles comprising the cured composition of the present invention, preferably wherein at least part of the article is 3D-printed or molded.

Three-dimensional (3D) printing

The curable compositions as described herein may also be 3D-printing compositions and may be used in a 3D printing process.

Three-dimensional (3D) printing (also referred to as additive manufacturing) is a process in which a 3D article is manufactured by accretion of construction material. The 3D printed article is created by utilizing the computer-aided design (CAD) data of an object through sequential construction of two dimensional (2D) layers or slices that correspond to cross-sections of 3D objects. Such 3D printed articles may be free-standing/self-supporting and may comprise, consist essentially of, or consist of an at least partially cured composition as described herein. The three-dimensional article may also be a composite, comprising at least one component consisting essentially of or consisting of at least partially cured composition as described herein as well as at least one additional component comprised of one or more materials other than such a cured composition (for example, a metal component, a thermoplastic component, an inorganic filler and/or a fibrous reinforcement).

The 3D printed article may be obtained with a process for the preparation of a 3D printed article that comprises printing a 3D printed article with the curable compositions as described herein. In particular, the process may comprise printing a 3D printed article layer by layer or continuously.

The process for the preparation of a 3D printed article may comprise curing the curable compositions of the invention. In particular, the curable compositions may be cured by exposing the curable compositions to actinic radiation. Specifically, the actinic radiation may include UV, near-UV, visible, infrared and/or near-infrared radiation, or electron beam radiation.

A plurality of layers of a curable composition as described herein may be applied to a substrate surface; the plurality of layers may be simultaneously cured (by exposure to a single dose of radiation, for example) or each layer may be successively cured before application of an additional layer of the curable composition. In some embodiments, each layer may be successively cured before the application of an additional layer, then the plurality of layers may be simultaneously cured.

The curable compositions may be partially cured during the 3D printing process to form a green composition. As described below, the green composition may then be post-cured to form a post-cured composition. It should be understood that the cured composition may include both the green composition and the post-cured composition. Accordingly, the curable compositions may be used to construct a 3D printed article which may comprise the curable compositions, the green composition, the post-cured compositions, or a combination of these.

In particular, the process for the preparation of a 3D printed article may comprise the steps of:

a) providing (e.g., coating) a first layer of the curable composition as described herein onto a surface;
b) curing the first layer, at least partially, to provide a cured first layer;
c) providing (e.g., coating) a second layer of the curable composition as described herein onto the cured first layer;
d) curing the second layer, at least partially, to provide a cured second layer adhered to the cured first layer; and
e) repeating steps c) and d) a desired number of times to build up the 3D printed article.

The process may further comprise step f) exposing the 3D printed article to actinic radiation, wherein the actinic radiation is of sufficient intensity and duration to cause at least 50 wt. %, at least 60 wt. %, at least 70 wt. %, at least 80 wt. %, at least 90 wt. %, at least 95 wt. %, or even at least 99 wt. % of the polymerizable components in the curable composition to cure, based on the total weight of polymerizable components in the curable composition. The entirety of, or portions of, the 3D printed article may be exposed to the actinic radiation.

Although the curing steps may be carried out by any suitable means, which will in some cases be dependent upon the components present in the curable composition, in certain embodiments of the disclosure the curing is accomplished by exposing the layer to be cured to an effective amount of radiation, in particular actinic radiation as described above.

After the 3D printed article has been printed, it may be subjected to one or more post-processing steps. The post-processing steps can be selected from one or more of the following steps removal of any printed support structures, washing with water and/or organic solvents to remove residual resins, and post-curing using thermal treatment and/or actinic radiation either simultaneously or sequentially. The post-processing steps may be used to transform the freshly printed article into a finished, functional article ready to be used in its intended application.

In some embodiments of the one or more post-processing steps, curing may be accelerated or facilitated by supplying energy to the curable composition, such as by heating the curable composition. An actinically-curable

composition may be cured by exposure to actinic radiation, with further curing being achieved by heating the partially cured article. For example, an article formed from the curable composition (e.g., a 3D printed article) may be heated at a temperature of from 40°C to 250°C for a period of time of from 5 minutes to 12 hours.

Suitable 3D printing processes include digital light printing (DLP), stereolithography (SLA), inkjet, multi-jet printing, piezoelectric printing, actinically-cured extrusion, liquid crystal display (LCD) printing, gel deposition printing, continuous liquid interface (or interphase) printing (CLIP), high viscosity printing using a carrier film, and combinations of any of these.

## ASPECTS OF THE INVENTION

The invention may be according to the following aspects.

Aspect 1. A urethane (meth)acrylate, wherein the urethane (meth)acrylate results from the reaction of:

- at least one caprolactone-diol resulting from the reaction of caprolactone and dipropylene glycol;
- at least one polyisocyanate; and
- at least one hydroxy-functional (meth)acrylate.

Aspect 2. The urethane (meth)acrylate of aspect 1, wherein the caprolactone-diol has a molecular weight (M) from 300 to 1,300 g/mol, preferably from 400 to 1,200 g/mol, more preferably from 500 to 1,100 g/mol.

Aspect 3. The urethane (meth)acrylate of any one of the preceding aspects, wherein the caprolactone-diol comprises from 2 to 10, preferably from 3 to 9, preferably from 4 to 8, units derived from ring-opening of caprolactone.

Aspect 4. The urethane (meth)acrylate of any one of the preceding aspects, wherein the weight content of caprolactone units in the caprolactone-diol is from 60 to 96 wt.%, preferably from 70 to 94 wt.%, more preferably from 75 to 92 wt.%, based on the total weight of the caprolactone-diol.

Aspect 5. The urethane (meth)acrylate of any one of the preceding aspects, wherein the caprolactone-diol represented by the following formula (I):

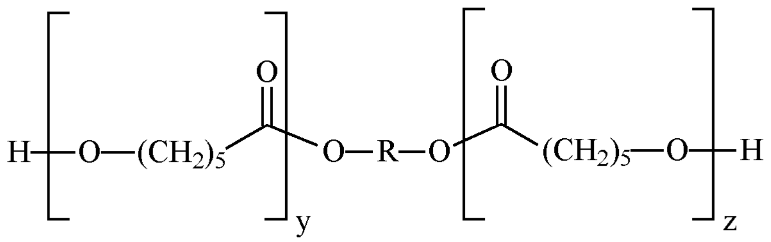

(I)

wherein

R is the residue of dipropylene glycol (without the OH groups, i.e., -CHR'-CHR"-O-CHR*-CHR**-wherein one of R' and R" is H and the other is Me and one of R* and R** is H and the other is Me);

y and z are independently from 0 to 10 and the sum y + z is from 2 to 10.

Aspect 6. The urethane (meth)acrylate of any one of the preceding aspects, wherein the molar ratio caprolactone:dipropylene glycol in the caprolactone-diol is from 2:1 to 10:1, preferably from 3: 1 to 9: 1, more preferably from 4: 1 to 8:1.

Aspect 7. The urethane (meth)acrylate of any one of the preceding aspects, wherein the polyisocyanate is a diisocyanate preferably chosen from an aliphatic, a cycloaliphatic, and an aromatic diisocyanate, preferably a cycloaliphatic diisocyanate, and more preferably the polyisocyanate is isophorone diisocyanate.

Aspect 8. The urethane (meth)acrylate of any one of the preceding aspects, wherein the hydroxy-functional (meth)acrylate is chosen from a hydroxyalkyl (meth)acrylate, a poly(oxyalkylene) (meth)acrylate and a caprolactone (meth)acrylate, preferably a hydroxyalkyl (meth)acrylate, and more preferably 2-hydroxyethyl (meth)acrylate.

Aspect 9. The urethane (meth)acrylate of any one of the preceding aspects, wherein the weight content of caprolactone-diol units in the urethane (meth)acrylate is from 20 to 80 wt.%, preferably from 25 to 75 wt.%, more preferably from 30 to 70 wt.%, based on the total weight of the urethane (meth)acrylate.

Aspect 10. The urethane (meth)acrylate of any one of the preceding aspects, wherein the weight content of polyisocyanate units in the urethane (meth)acrylate is from 5 to 70 wt.%, preferably from 10 to 50 wt.%, more preferably from 15 to 40 wt.%, based on the total weight of the urethane (meth)acrylate.

Aspect 11. The urethane (meth)acrylate of any one of the preceding aspects, wherein the weight content of

hydroxy-functional (meth)acrylate units in the urethane (meth)acrylate is from 2 to 50 wt.%, preferably from 5 to 30 wt.%, more preferably from 10 to 25 wt.%, based on the total weight of the urethane (meth)acrylate.

Aspect 12. The urethane (meth)acrylate of any one of the preceding aspects, wherein the urethane (meth) acrylate corresponds to the following formula (VIII):

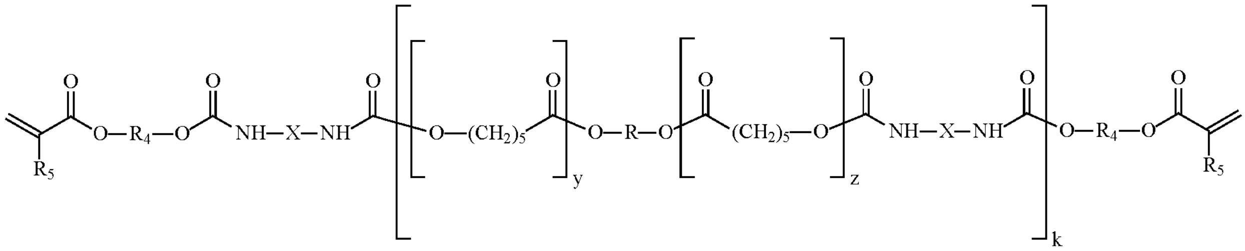

(VIII)

wherein

R is the residue of dipropylene glycol;
X is a divalent organic moiety, preferably X is the residue of isophorone diisocyanate;
$R_4$ is $-(CR_{22}R'_{22})_m-$, preferably $-CH_2-CH_2-$, $-CH_2-CH(CH_3)-$ or $-CH(CH_3)-CH_2-$, more preferably $-CH_2-CH_2-$;
$R_5$ is H or methyl;
$R_{22}$ and $R'_{22}$ are independently H or alkyl, preferably H or methyl;
k is from 1 to 50, preferably from 1 to 20, more preferably from 1 to 10;
m is from 2 to 50, preferably from 2 to 6, more preferably from 2 to 4;
y and z are independently from 0 to 10 and the sum y + z is from 2 to 10.

Aspect 13. A process for preparing a urethane (meth)acrylate comprising the steps of:

a) providing a caprolactone-diol resulting from the reaction of caprolactone and dipropylene glycol; and
b) reacting the caprolactone-diol of step a) with at least one polyisocyanate and at least one hydroxy-functional (meth) acrylate to obtain a urethane (meth)acrylate.

Aspect 14. A curable composition comprising:

A) at least one urethane (meth)acrylate according to any one of aspects 1 to 12 or obtained according to the process of aspect 13; and
B) a polymerizable component other than component A).

Aspect 15. The curable composition of aspect 14, comprising from 1 to 99 wt.%, from 5 to 95%, from 10 to 90 wt.%, from 15 to 85 wt.%, from 20 to 80 wt.%, from 25 to 75 wt.%, from 30 to 70 wt.%, from 35 to 65 wt.% or from 40 to 60 wt.%, of component A) based on the total weight of components A) and B).

Aspect 16. The curable composition of aspect 14 or 15, comprising from 1 to 99 wt.%, from 5 to 95 wt.%, from 10 to 90 wt.%, from 15 to 85 wt.%, from 20 to 80 wt.%, from 25 to 75 wt.%, from 30 to 70 wt.%, from 35 to 65 wt.% or from 40 to 60 wt.%, of component B) based on the total weight of components A) and B).

Aspect 17. The curable composition of any one of aspects 14 to 16, comprising from 1 to 99 wt.%, from 5 to 95 wt.%, from 5 to 90 wt.%, from 10 to 85 wt.%, from 10 to 80 wt.%, from 15 to 75 wt.%, from 15 to 70 wt.%, from 20 to 65 wt.% or from 20 to 60 wt.%, of component A) based on the weight of the curable composition.

Aspect 18. The curable composition of any one of aspects 14 to 17, comprising from 1 to 99 wt.%, from 5 to 95 wt.%, from 5 to 90 wt.%, from 10 to 85 wt.%, from 10 to 80 wt.%, from 15 to 75 wt.%, from 15 to 70 wt.%, from 20 to 65 wt.% or from 20 to 60 wt.%, of component B) based on the weight of the curable composition.

Aspect 19. The curable composition of any one of aspects 14 to 18, wherein component b) comprises one or more (meth)acrylate-functionalized monomers selected from a mono(meth)acrylate-functionalized monomer, a urethane di(meth)acrylate monomer and mixtures thereof, preferably selected from a hydroxyalkyl (meth)acrylate, a urethane di(meth)acrylate monomer and mixtures thereof.

Aspect 20. The curable composition of any one of aspects 14 to 19, further comprising one or more other components selected from:

- an initiator component comprising one or more compounds selected from an initiator, a sensitizer, an amine synergist and mixture thereof;
- an additive component comprising one or more additives selected from the group consisting of stabilizers, foam inhibitors, flow or leveling agents, colorants, pigments, dispersants, slip additives, fillers, thixotropic agents, matting agents, impact modifiers, waxes and mixtures thereof;
- a solvent component;

and mixtures thereof.

Aspect 21. The curable composition of any one of aspects 14 to 20, comprising from 1 to 95 wt.%, for example from 5 to 90 wt.%, from 10 to 80 wt.%, or from 20 to 70 wt.%, of component b) based on the total weight of the curable composition.

Aspect 22. The curable composition of any one of aspects 14 to 21, comprising from 0.1 to 10 wt.% of initiator, for example from 0.2 to 9 wt.%, from 0.5 to 8 wt.%, or from 1 to 6 wt.%, based on the total weight of the curable composition.

Aspect 23. Use of the curable composition of any one of aspects 14 to 22 as a coating composition, a sealant composition, a molding composition, a dental composition, a composite material composition or a 3D printing composition.

Aspect 24. Method of making a cured composition, comprising curing the curable composition of any one of aspects 14 to 22.

Aspect 25. The method of aspect 24, comprising exposing the curable composition to radiation such UV, near-UV, visible, infrared, near-infrared and/or electron beam radiation or heat.

Aspect 26. A cured composition obtained by curing the curable composition of any one of aspects 14 to 22.

Aspect 27. An article comprising the cured composition of aspect 26, preferably wherein at least part of the article is 3D-printed or molded.

## EXAMPLES

The following examples illustrate the invention without limiting it.

### Raw materials

The following components were used in the examples (Table 1):

Table 1

| Abbreviations or Trade Name | Full Name and Supplying Information |
|---|---|
| Caprolactone | ε-caprolactone (E-CLO), BASF, M = 114.14 g/mol |
| Dipropylene glycol | Sigma-Aldrich, M = 134.17 g/mol |
| IPDI | isophorone diisocyanate, Vencorex, M = 222.3 g/mol |
| HEMA | 2-hydroxyethylmethacrylate, GEO Chemicals, M= 130.14 g/mol |
| CAPA 2085 | CAPA® 2085, Ingevity, polycaprolactone diol initiated with diethylene glycol, M = 830 g/mol |
| Propionic acid | Sigma-Aldrich |
| TibCat 716 | TibCat® 716, TIB Chemicals, a liquid catalyst based on bismuth |
| BHT | Sigma-Aldrich |
| CN1964 | Urethane dimethacrylate, Arkema |
| HPMA | 2-Hydroxypropyl methacrylate, GEO specialty Chemicals |
| TPO-L | SpeedCure® TPO-L (ethyl (2,4,6-trimethylbenzoyl)phenyl phosphinate), Arkema |

### Measurement methods

The following measurement methods were employed to measure the various properties in the examples:

Viscosity Measurement

The viscosity was measured with a Brookfield DV2T LV, according to the manufacturer data:

- Mobile S18: 0 to 30,000 mPa.s
- Mobile S34: 0 to 600,000 mPa.s

These viscosity ranges are applicable regardless of the temperature, at the lowest possible rotation speed (0.1 rpm).

Molecular weight (M) of the caprolactone-diol

The molecular weight (M) of the caprolactone-diol was calculated according to the following equation (eq. 1):

$$M = (56100 * F)/iOH \quad \text{(eq.1)}$$

wherein:

F is the hydroxyl functionality of the caprolactone-diol (i.e., 2), and
iOH is the hydroxyl value (in mg KOH/g) of the caprolactone-diol.
Hydroxyl number (iOH) of the caprolactone-diol

The hydroxyl number of the caprolactone-diols was measured by titration using an isocyanate, which is isophorone diisocyanate (IPDI) in the present example.
The following method was used:
5 g of isophorone diisocyanate (IPDI) and 10 g of caprolactone-diol (PCL) were added to a closed Erlenmeyer flask. 50 mL of toluene was then added to the flask, and the mixture was stirred for 2 hours at 60°C.
The isocyanate index (iNCO) was determined by titrating using a 0.1N potassium hydroxide (KOH) solution and a Methrom Titrando 888 titrator. The result is expressed in mg KOH per gram of sample.
The hydroxyl functionality (iOH) of the caprolactone-diol (PCL) was then calculated using the following equation (eq.2):

$$iOH_{PCL} = \frac{(m_{IPDI} \times NCOew_{IPDI}) - (m_{tot} \times iNCO_{measured})}{m_{PCL}} \quad \text{(eq. 2)}$$

wherein:

$m_{IPDI}$ is the weight of IPDI in grams (5 g of IPDI were used in the present method),
$m_{PCL}$ is the weight of PCL in grams (10 g of PCL were used in the present method),
$m_{tot}$ is the total weight of IPDI and PCL in grams (15 g of IPDI and PCL were used in the present method),
$NCOew_{IPDI}$ is the NCO equivalent of IPDI which can be determined with the following formula: $NCOew_{IPDI} = (56100/M_{IPDI})*F_{IPDI}$ where $M_{IPDI}$ is the molecular weight of IPDI (i.e., 222.3 g/mol) and $F_{IPDI}$ is the functionality of IPDI (i.e., 2), and
$iNCO_{measured}$ (in mg KOH/g) is the residual NCO index measured after reaction of IPDI and PCL.

Dynamic Mechanical Analysis (DMA) was performed using the HR20 machine from TA Instruments. The testing involved rectangular torsion at a frequency of 1 Hz with an initial deformation of 0.05%, and a temperature ramp from -90°C to 200°C at a rate of 3°C/min.
Tensile Testing was carried out on the Instron 68TM5 machine following the ISO 527/2 standard (2012), with a speed profile of 0.25 mm/min for the initial stage (0.05% to 0.25%) and 5 mm/min for the second stage, using Type 5A long tab samples and a clip-on extensometer.
3-Point Flexural Testing was executed on the Instron 68TM5 machine in accordance with the ISO 178 standard (2019), at a speed of 2 mm/min on samples measuring 80 mm by 10 mm by 4 mm.
IZOD Impact Test - ISO 180 (2019) was conducted using the MTS Exceed E21 machine with a 1J pendulum and an epA notch type on samples measuring 80 mm by 10 mm by 4 mm.
IZOD Impact Test - ASTM 256-A (2002) was performed using the Instron 68TM5 machine with a 1J pendulum and an epA notch type on samples measuring 60-64 mm by 12.7 mm by 3.2 mm.
Shore Hardness Measurement was conducted according to the NF ISO 868 standard (2003) using a Zwick

durometer. Measurements, taken after 15 seconds of contact between the measurement tip and the sample, were done in either Shore A or Shore D.

**Example 1 - Synthesis of the caprolactone-diol (PCL1)**

The synthesis of caprolactone-diol PCL1 was conducted at 160°C under a nitrogen atmosphere using the components and quantity provided in Table 2. Quantities were adjusted for a theoretical molecular weight (M) of 830 g/mol for the PCL. Prior to the reaction, the caprolactone and the dipropylene glycol were dried under vacuum (80 mbar) at 120°C. The reaction endpoint was determined by measuring the Brookfield viscosity at 50°C. The hydroxyl number (iOH) titration method was used for determining the molecular weight (M) of the caprolactone-diol PCL1.

Table 2

| **Component** | **Quantity (g)** |
|---|---|
| Caprolactone | 837.34 |
| Dipropylene glycol | 161.46 |
| Propionic acid | 0.2 |
| TibCat 716 | 1 |
| Total weight (g) | 1000 |
| | |
| Molar ratio caprolactone:diol | 6.1 |
| Viscosity Brookfield mPa.s | 246 |
| iOH mgKOH/g | 133.2 |
| M (g/mol) | 842.30 |

**Example 2 - Synthesis of the urethane methacrylates (UMA)**

Two urethane methacrylates (UMA) were synthetized in this example. Components and quantities (in grams) are indicated in Table 3. One of these UMA (UMA1) is according to the present invention and results from the reaction of PCL1 (as described above), along with IPDI and HEMA; and the comparative urethane methacrylate (UMA2) is based on the same components, however with a different caprolactone-diol (PCL2), i.e., CAPA 2085, a polycaprolactone diol initiated with diethylene glycol with a molecular weight M of 801.40 g/mol as measured according to the method described herein. Both UMA were synthesized using the semi-adduct route. More precisely, HEMA and IPDI were reacted at a temperature of 60°C for a time of 2h30 to form a HEMA-IPDI adduct. The HEMA-IPDI adduct was added during 30 min at a temperature of 60°C. It then reacted at a temperature of 105°C for a time of 7h30 h with PCL1 to form the UMA.

The synthesis parameters were as follows:

| | |
|---|---|
| - Ratio eq NCO IPDI / eq OH HEMA | 0.5 |
| -Ratio eq NCO IPDI/ eq OH PCL | 0.5 |
| - BHT | 1000 ppm |
| - TibCat 716 | 900 ppm |

Table 3

| | **UMA1 (inv)** | **UMA2 (comp)** |
|---|---|---|
| IPDI (iNCO = 505.405 mg KOH/g) | 286.53 | 294.32 |
| HEMA (iOH = 431.074 mg KOH/g) | 167.97 | 172.53 |
| PCL1 (inv) (iOH = 132.600 mg KOH/g) | 543.60 | |
| PCL2 (comp) (iOH = 140.000 mg KOH/g) | | 531.25 |
| BHT | 1 | 1 |
| TibCat 716 | 0.9 | 0.9 |

(continued)

| | UMA1 (inv) | UMA2 (comp) |
|---|---|---|
| Total weight (g) | 1,000 | 1,000 |
| Viscosity Brookfield mPa.s | 24.3 | 35.6 |

**Example 3 - Formulations for 3D printing**

UMA 1 and UMA2 were tested in formulation consisting of UMA/CN1964/HPMA 50/20/30; 2%phr TPOL. The formulations were 3D-printed using the following process: 3D Printing was carried out using the ASIGA 385nm printer with the PLASTClear V2 program. Post-Curing was performed using the FormCure device, with a program of 40 minutes at 60°C.

The results, outlined in Table 4 below, demonstrate that UMA1 according to the invention exhibits a significantly higher hardness compared to the comparative UMA2. This means that UMA1 possesses greater resistance to deformation, wear, surface indentation or penetration, indicating its potential for applications requiring materials with superior durability and surface toughness.

Table 4

| **Formulation UMA/HPMA/CN1964 50/30/20; 2%TPOL** | | Formulation 1 with UMA 1 (inv) | Formulation 2 with UMA 2 (comp) |
|---|---|---|---|
| **Visco @25°C (mPa.s)** | | 1,700 | 1,960 |
| **Tα (°C) DMA** | | 82 | 80 |
| **Tensile** | Tensile Strength at break (MPa) | 41.7 | 43.9 |
| | Elongation at break (%) | 17.85 | 15.94 |
| | Young Modulus (MPa) | 1,968 | 2,056 |
| **Flexural** | Flex Strength (Mpa) | 45.4 | 48.3 |
| | Flex Strain (%) | 6.1 | 6.1 |
| | Deflection (mm) | 10.18 | 10.24 |
| | Young Modulus (MPa) | 1,420 | 1,500 |
| **Izod notched ISO ($kJ/m^2$)** | | 2.7 | 2.9 |
| **Izod notched ASTM (J/m)** | | 24.6 | 27.3 |
| **Hardness Shore D** | | **80** | 74 |

**Claims**

1. A urethane (meth)acrylate, wherein the urethane (meth)acrylate results from the reaction of:

   - at least one caprolactone-diol resulting from the reaction of caprolactone and dipropylene glycol;
   - at least one polyisocyanate; and
   - at least one hydroxy-functional (meth)acrylate.

2. The urethane (meth)acrylate of claim 1, wherein the caprolactone-diol has a molecular weight (M) from 300 to 1,300 g/mol, preferably from 400 to 1,200 g/mol, more preferably from 500 to 1,100 g/mol.

3. The urethane (meth)acrylate of any one of the preceding claims, wherein the caprolactone-diol comprises from 2 to 10, preferably from 3 to 9, preferably from 4 to 8, units derived from ring-opening of caprolactone.

4. The urethane (meth)acrylate of any one of the preceding claims, wherein the weight content of caprolactone units in the caprolactone-diol is from 60 to 96 wt.%, preferably from 70 to 94 wt.%, more preferably from 75 to 92 wt.%, based on the total weight of the caprolactone-diol.

**5.** The urethane (meth)acrylate of any one of the preceding claims, wherein the molar ratio caprolactone: dipropylene glycol in the caprolactone-diol is from 2:1 to 10:1, preferably from 3:1 to 9:1, more preferably from 4:1 to 8:1.

**6.** The urethane (meth)acrylate of any one of the preceding claims, wherein the polyisocyanate is a diisocyanate preferably chosen from an aliphatic, a cycloaliphatic, and an aromatic diisocyanate, preferably a cycloaliphatic diisocyanate, and more preferably the polyisocyanate is isophorone diisocyanate.

**7.** The urethane (meth)acrylate of any one of the preceding claims, wherein the hydroxy-functional (meth)acrylate is chosen from a hydroxyalkyl (meth)acrylate, a poly(oxyalkylene) (meth)acrylate and a caprolactone (meth)acrylate, preferably a hydroxyalkyl (meth)acrylate, and more preferably 2-hydroxyethyl (meth)acrylate.

**8.** The urethane (meth)acrylate of any one of the preceding claims, wherein the urethane (meth)acrylate corresponds to the following formula (VIII):

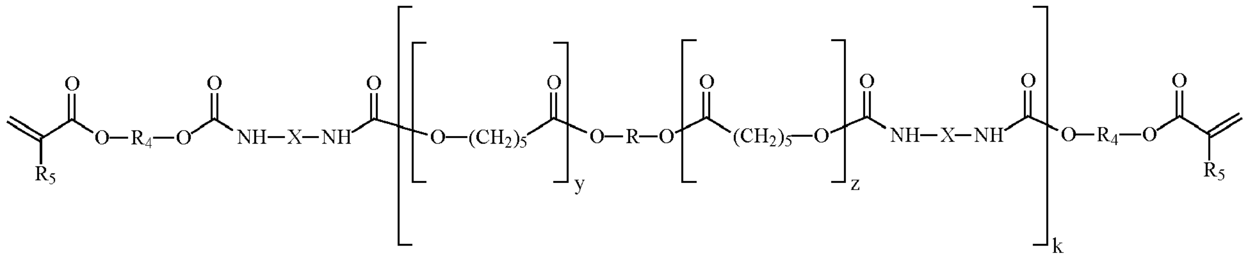

(VIII)

wherein

R is the residue of dipropylene glycol;
X is a divalent organic moiety, preferably X is the residue of isophorone diisocyanate;
$R_4$ is $-(CR_{22}R'_{22})_m-$, preferably $-CH_2-CH_2-$, $-CH_2-CH(CH_3)-$ or $-CH(CH_3)-CH_2-$, more preferably $-CH_2-CH_2-$;
$R_5$ is H or methyl;
$R_{22}$ and $R'_{22}$ are independently H or alkyl, preferably H or methyl;
k is from 1 to 50, preferably from 1 to 20, more preferably from 1 to 10;
m is from 2 to 50, preferably from 2 to 6, more preferably from 2 to 4;
y and z are independently from 0 to 10 and the sum y + z is from 2 to 10.

**9.** A process for preparing a urethane (meth)acrylate comprising the steps of:

a) providing a caprolactone-diol resulting from the reaction of caprolactone and dipropylene glycol; and
b) reacting the caprolactone-diol of step a) with at least one polyisocyanate and at least one hydroxy-functional (meth)acrylate to obtain a urethane (meth)acrylate.

**10.** A curable composition comprising:

A) at least one urethane (meth)acrylate according to any one of claims 1 to 8 or obtained according to the process of claim 9; and
B) a polymerizable component other than component A).

**11.** The curable composition of claim 10, wherein component B) comprises one or more (meth)acrylate-functionalized monomers selected from a mono(meth)acrylate-functionalized monomer, a urethane di(meth)acrylate monomer and mixtures thereof, preferably selected from a hydroxyalkyl (meth)acrylate, a urethane di(meth)acrylate monomer and mixtures thereof.

**12.** Use of the curable composition of claim 10 or claim 11 as a coating composition, a sealant composition, a molding composition, a dental composition, a composite material composition or a 3D printing composition.

**13.** Method of making a cured composition, comprising curing the curable composition of claim 10 or claim 11, preferably comprising exposing the curable composition to radiation such UV, near-UV, visible, infrared, near-infrared and/or

electron beam radiation or heat.

**14.** A cured composition obtained by curing the curable composition of claim 10 or claim 11.

**15.** An article comprising the cured composition of claim 14, preferably wherein at least part of the article is 3D-printed or molded.

Europäisches Patentamt
European Patent Office
Office européen des brevets

# EUROPEAN SEARCH REPORT

Application Number
EP 24 30 6374

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 105 038 566 A (SHANGHAI WEIKAI OPTOELECTRONIC NEW MATERIAL CO LTD ET AL.) 11 November 2015 (2015-11-11) * example 1 * ----- | 1-15 | INV. C08G18/22 B33Y70/00 C08F290/06 C08G18/42 C08G18/67 C08G18/75 |

TECHNICAL FIELDS SEARCHED (IPC)
C08G
B33Y
C08F

The present search report has been drawn up for all claims

1

| Place of search | Date of completion of the search | Examiner |
|---|---|---|
| Munich | 28 January 2025 | Bergmeier, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 30 6374

This annex lists the patent family members relating to the patent documents cited in the above-mentioned European search report. The members are as contained in the European Patent Office EDP file on
The European Patent Office is in no way liable for these particulars which are merely given for the purpose of information.

28-01-2025

| Patent document cited in search report | Publication date | Patent family member(s) | Publication date |
|---|---|---|---|
| CN 105038566 A | 11-11-2015 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20200199346 A1